Europäisches Patentamt

European Patent Office

Office européen des brevets

(19)

(11) Numéro de publication: **0 265 025**
**B1**

(12) **FASCICULE DE BREVET EUROPEEN**

(45) Date de publication du fascicule du brevet: **09.01.91**

(51) Int. Cl.⁵: **G 01 T 1/164**

(21) Numéro de dépôt: **87202022.7**

(22) Date de dépôt: **21.10.87**

(54) **Caméra à scintillation.**

(30) Priorité: **24.10.86 FR 8614798**

(43) Date de publication de la demande:
**27.04.88 Bulletin 88/17**

(45) Mention de la délivrance du brevet:
**09.01.91 Bulletin 91/02**

(84) Etats contractants désignés:
**BE DE FR GB IT NL SE**

(56) Documents cités:
**EP-A-0 166 165**
**FR-A-2 552 233**
**FR-A-2 570 507**

(73) Titulaire: **LABORATOIRES D'ELECTRONIQUE PHILIPS**
**3, Avenue Descartes**
**F-94450 Limeil-Brévannes (FR)**
(84) **FR**

(73) Titulaire: **N.V. Philips' Gloeilampenfabrieken**
**Groenewoudseweg 1**
**NL-5621 BA Eindhoven (NL)**
(84) **BE DE GB IT NL SE**

(72) Inventeur: **Jatteau, Michel Société Civile S.P.I.D.**
**209, rue de l'Université**
**F-75007 Paris (FR)**

(74) Mandataire: **Landousy, Christian et al**
**Société Civile S.P.I.D. 156, Boulevard Haussmann**
**F-75008 Paris (FR)**

Courier Press, Leamington Spa, England.

EP 0 265 025 B1

# EP 0 265 025 B1

**Description**

La présente invention a trait au domaine de la médecine nucléaire et concerne plus spécialement une caméra à scintillation comprenant un cristal scintillateur éventuellement équipé d'un collimateur et destiné à convertir chaque photon reçu en une scintillation, un guide de lumière pour le couplage dudit cristal à la fenêtre d'entrée d'un jeu de p photodétecteurs destinés à convertir en courant chaque scintillation, p voies d'acquisition recevant les signaux de sortie desdits photodétecteurs et délivrant p signaux électriques de caractéristiques liées notamment à l'intensité de la scintillation et à la distance de cette scintillation à chacun des photodétecteurs, et un calculateur destiné à délivrer les coordonnées $x_j$ et $y_j$ d'une scintillation j et l'énergie $E_j$ qui est associée à cet événement j.

Pour déterminer l'image de fixations radioactives à l'intérieur d'un organe, la médecine fait appel, entre autres moyens, au principe de la scintigraphie. Ce principe consiste à introduire dans l'organisme d'un patient un élément radioactif qui va se fixer plus ou moins sur certains organes selon que deux-ci sont sains ou malades. La mesure de l'intensité de rayonnement gamma émis fournit alors une indication sur la répartition de l'élément radioactif dans l'organisme et constitue donc une aide au diagnostic. Une telle mesure est réalisée à l'aide d'une caméra à scintillation.

Dans les caméras à scintillation traditionnelles, par exemple de type Anger (le physicien Anger étant le premier à avoir proposé une caméra à scintillation, dont les principes fondamentaux sont décrits dans le brevet des Etats-Unis d'Amérique no 3011057), les rayons gamma représentatifs de la distribution radioactive dans le milieu examiné pénètrent, après traversée d'un collimateur, dans un cristal scintillateur. Les scintillations qui se produisent dans ce cristal sont alors détectées par l'intermédiaire de toute une série de tubes photomultiplicateurs (par exemple 37), après traversée d'un guide de lumière assurant un couplage optique entre le cristal et les tubes. Ces tubes sont répartis devant le bloc optique (cristal + guide de lumière) pour couvrir pratiquement toute sa surface et transformer l'énergie lumineuse de chaque scintillation apparue en un signal électrique mesurable.

En sortie de chaque tube photomultiplicateur est alors prévue une voie d'acquisition analogique, opérant successivement une amplification, une intégration et une mise en forme des signaux fournis par le tube. Les sorties $S_{ij}$ de l'ensemble de ces voies d'acquisition sont envoyées vers un calculateur qui fournit par estimation les coordonnées $x_j$ et $y_j$ d'une scintillation j et son énergie $E_j$ (l'indice i désigne celle des voies d'acquisition qui est concernée). Dans le calculateur, plusieurs types de dispositifs de calcul peuvent être prévus, mais deux d'entre eux essentiellement sont réellement utilisés, à savoir un dispositif de calcul barycentrique à rapport arithmétique, ou un dispositif de calcul barycentrique à rapport logarithmique.

Dans un dispositif de calcul barycentrique à rapport arithmétique, les grandeurs $x_j$, $y_j$, $E_j$ sont données par les expressions:

$$x_j = \frac{X_j}{Z_j} \tag{1}$$

$$y_j = \frac{Y_j}{Z_j} \tag{2}$$

$$E_j = \sum_{i=1}^{i=p} G_i \, S_{ij} \tag{3}$$

Dans ces expressions, on a:

$$X_j = \sum_{i=1}^{i=p} K_i \, S_{ij} \tag{4}$$

$$Y_j = \sum_{i=1}^{i=p} H_i \, S_{ij} \tag{5}$$

$$Z_j = \sum_{i=1}^{i=p} J_i \, S_{ij} \tag{6}$$

Les coefficients $G_i$, $K_i$, $H_i$, $J_i$ sont des facteurs de pondération liés à la position de l'axe de chacun des p tubes photomultiplicateurs.

2

EP 0 265 025 B1

Dans un dispositif de calcul barycentrique à rapport logarithmique, les grandeurs $x_j$, $y_j$, $E_j$ sont cette fois données par les expressions:

$$x_j = \frac{1}{a} \; Log \; \frac{X_j^+}{X_j^-} \qquad (7)$$

$$y_j = \frac{1}{a} \; Log \; \frac{Y_j^+}{Y_j^-} \qquad (8)$$

$$E_j = \sum_{i=1}^{i=p} G_i \; S_{ij} \qquad (9)$$

avec :

$$X_j^+ = \sum_{i=1}^{i=p} K_i^+ \; S_{ij} \qquad (10)$$

$$X_j^- = \sum_{i=1}^{i=p} K_i^- \; S_{ij} \qquad (11)$$

$$Y_j^+ = \sum_{i=1}^{i=p} H_i^+ \; S_{ij} \qquad (12)$$

$$Y_j^- = \sum_{i=1}^{i=p} H_i^- \; S_{ij} \qquad (13)$$

Les facteurs de pondération sont également liés à la position de l'axe de chacun des p tubes photomultiplicateurs.

Dans l'un ou l'autre cas, quelle que soit l'arithmétique utilisée, une modification de calcul des coordonnées a été proposée pour améliorer la résolution spatiale intrinsèque de la caméra. Cette modification, désomais utilisée dans la plupart des caméras à scintillation développées dans le domaine de la médicine nucléaire et décrite par exemple dans le brevet des Etats-Unis d'Amérique US—A—3 732 419, consiste à introduire un seuil $s_0$ dans le calcul des signaux composites $X_j$, $Y_j$, $Z_j$ ou $X_j^+$, $X_j^-$, $Y_j^+$, $Y_j^-$.

Plus précisément, et en prenant par exemple le cas d'un dispositif de calcul barycentrique à rapport arithmétique, les signaux composites $X_j$, $Y_j$ sont maintenant donnés par les expressions:

$$X_j = \sum_{i=1}^{i=p} K_i \; (S_{ij}-s_0) \qquad (14)$$

$$Y_j = \sum_{i=1}^{i=p} H_i \; (S_{ij}-s_0) \qquad (15)$$

avec, en outre, la convention $S_{ij}-s_0 = 0$ si $S_{ij}$ est inférieur à $s_0$. Les relations (1), (2), (3) donnant $x_j$, $y_j$, $E_j$ et la relation (6) restent inchangées.

Cette introduction d'un seuil est réalisée au moyen d'un circuit à seuil introduit dans chacune des p voies analogiques d'acquisition. Ces p voies possèdent alors deux sorties, l'une pour les signaux $S_{ij}-s_0$ qui vont permettre le calcul de $X_j$ et $Y_j$, et l'autre pour les signaux $S_{ij}$ utilisés pour le calcul de $Z_j$ et $E_j$. La valeur $s_0$ du seuil est fixe et a été réglée une fois pour toutes lors de la fabrication, afin d'obtenir la meilleure résolution spatiale à une énergie donnée, pour exemple 140 keV.

Cependant, comme ce réglage est justement indépendant de l'énergie réelle des événements, une dégradation des performances des caméras (notamment distortions linéaires et pertes de résolution) se produit pour des énergies d'événements trop différentes de celle utilisée lors du réglage à la fabrication. C'est en particulier le cas lorsqu'on effectue des examens multi-isotopiques.

Le brevet des Etats-Unis d'Amérique US—A—4 475 042 remédie à cet inconvénient en proposant une caméra à scintillation à seuil dynamique, ledit seuil ayant une amplitude qui est une fonction du temps et de l'énergie de l'événement en cours de traitement. Ce seuil, appliqué comme le seuil fixe mentionné préalablement dans les p voies analogiques d'acquisition, en sortie des préamplificateurs associés aux

3

tubes photomultiplicateurs, est constitué par la somme de deux signaux. Le premier des deux signaux est une fraction du signal d'énergie qui résulte de la sommation pondérée des signaux forunis par tous les préamplificateurs, sans effet de seuil. Le deuxième signal est une fraction du signal d'énergie intégré qui correspond à la valeur intégrée du premier des deux signaux. A ces deux signaux, une composante continue peut encore, éventuellement, être superposée.

Le signal de seuil ainsi constitué présente en fonction du temps des fluctuations de type statistique c'est-à-dire liées au nombre de photons relatif à chacun des événement inclus dans l'observation. La valeur moyenne de ces fluctuations est liée à l'énergie de la scintillation, ou événement, en cours de traitement. Ce seuil est retranché de chacun des signaux fournis à sortie des préamplificateurs.

L'amélioration ainsi apportée par le document US—A—4 475 042 permet en effet de préserver les qualités d'image lorsqu'on travaille avec plusieurs isotopes simultanément.

Cette solution présente malgré tout, dans la pratique, des inconvénients sensibles:

(a) les signaux qui composant le seuil dynamique ne sont obtenus qu'après des déformations et des retards déterminés par la fonction de transfert des circuits traversés;

(b) le seuil dynamique est un signal qui fluctue en fonction du temps de façon aléatoire, et en outre varie d'un événement à l'autre, et ces fluctuations et variations statistiques d'amplitude relative et de phase différentes pour les signaux issus des préamplificateurs et pour seuil dynamique conduisent à ce que les signaux délivrés soient parfois, au lieu d'un signal nul ou d'un signal utile, du bruit qui dégrade à nouveau la résolution spatiale;

(c) le seuil dynamique ne convient plus à taux de comptage élevé, lorsqu'il y a empilement au moins partiel des événements, car la valeur moyenne du seuil dynamique n'est dans ce cas plus seulement liée à l'énergie du seuil événement en cours de traitement et est donc incorrecte;

(d) parmi l'ensemble des tubes photomultiplicateurs concernés par une scintillation déterminée, certains sont situés dans une position intermédiaire, à une distance telle de cette scintillation que l'amplitude maximale des impulsions fournies par les préamplificateurs n'est que deux à trois fois supérieure à l'amplitude moyenne du seuil dynamique. Pour les voies d'acquisition associées à ces tubes, les impulsions de sorties sont alors incomplètes puisque le seuil dynamique élimine justement la partie basse terminale de ces impulsions.

Le but de l'invention est donc de proposer une caméra à scintillation décrite dans la revendication 1 et dans laquelle on a remédié à ces inconvénients et en particulier au fait que les réalisations antérieures à seuil dynamique ne conviennent pas à taux de comptage élevé.

Dans deux variantes de réalisation de la caméra ainsi proposée, le calculateur peut n'utiliser qu'une seule des deux grandeurs Z ou E pour le calcul des coordonnées, compte tenu des possibilités de correction ultérieure offertes par les caméras à scintillation actuellement disponibles. Le calculateur ne comprend dans ce cas que trois dispositifs de sommation pondérée numérique dont les deux premiers reçoivent les p signaux $M_{ij}$—$m_{oj}$ déliverés par le circuit soustracteur de seuil et dont le dernier reçoit directement les p signaux de sortie $M_{ij}$ du bus de transfert. Le calculateur de seuil reçoit alors la sortie dudit dernier dispositif de sommation pondérée numérique pour l'évaluation du seuil asservi $m_{oj}$ selon une relation de proportionalité à la valeur $E_{mj}$ associée à chaque événement j.

Dans la première de ces deux variantes, l'étage de sommation numérique délivre les signaux $X_{m,j}$, $Y_{m,j}$, $Z_{m,j}$ suivantes ($K_i$, $H_i$, $J_i$, étant des coefficients de pondération):

$$X_{m,j} = \sum_{i=1}^{i=p} K_i (M_{ij}-m_{oj})$$

$$Y_{m,j} = \sum_{i=1}^{i=p} H_i (M_{ij}-m_{oj})$$

$$Z_{m,j} = \sum_{i=1}^{i=p} J_i M_{ij}$$

soit directement en sortie des premier et deuxième dispositifs de sommation pondérée numérique, pour les deux premiers de ces signaux, soit par l'intermédiaire d'un circuit de réalignement temporel prévu en sortie du dernier dispositif, pour le dernier de ces signaux.

Dans la deuxième de ces variantes, l'étage de summation numérique délivre les signaux $X_{m,j}$, $Y_{m,j}$, $E_{m,j}$ suivants ($K_i$, $H_i$, $G_i$, étant des coefficients de pondération):

$$X_{m,j} = \sum_{i=1}^{i=p} K_i \, (M_{ij} - m_{oj})$$

$$Y_{m,j} = \sum_{i=1}^{i=p} H_i \, (M_{ij} - m_{oj})$$

$$E_{m,j} = \sum_{i=1}^{i=p} G_i \, M_{ij}$$

Ces signaux sont également fournis soit directement en sortie des premier et deuxième dispositifs de sommation pondérée numérique, pour les deux premiers de ces signaux, soit par l'intermédiaire d'un circuit de réalignement temporel prévu en sortie du dernier dispositif, pour le dernier de ces signaux.

Dans l'une ou l'autre de ces structures de caméra, il est possible, grâce a l'utilisation du seuil asservi à la fois à l'énergie des événements et à l'effet d'empilement desdits événements, d'obtenir une résolution spatiale optimale quel que soit le taux de comptage et dans toute la gamme d'énergie des rayonnements utilisés. La caméra à scintillation ainsi obtenue est plus rapide et plus performante que les réalisations antérieures et, entre autres, convient tout particulièrement pour les examens multi-isotopiques.

Les particularités et avantages de l'invention apparaîtront maitenant de façon plus détaillée dans la description qui suit et dans les dessins annexé, donnés à titre d'exemples non limitatifs et dans lesquels:

— les figures 1a à 1c montrent respectivement la forme des signaux individuels correspondant à des scintillations rapprochées entraînant un empilement partiel (figure 1a), la forme du signal global résultant de cet empilement (figure 1b), et la forme du signal représentant pour chaque événement j la valeur mesurée à l'instant $t_{o,j+1}$ et qui résulte de la sommation des échantillons pendant l'intervalle de temps $\theta_{j,j+1}$ pour la voie d'acquisition i (figure 1c);

— les figures 2 et 3 montrent les schémas de principe d'une caméra à scintillation selon l'état de la technique et selon l'invention respectivement;

— la figure 4 montre un premier mode de réalisation du calculateur d'une caméra à scintillation conforme à l'invention;

— la figure 5 montre une exemple de réalisation d'un des circuits de calcul de désempilement de l'étage de traitement des événements;

— la figure 6 montre un exemple de réalisation de l'étage de détection, séquencement et stockage;

— la figure 7 montre une variante de réalisation des circuits de calcul de désempilement tels que celui de la figure 5;

— la figure 8 montre un deuxième de réalisation du calculateur d'une caméra à scintillation conforme à l'invention, incluant la variante de réalisation du circuit de calcul de désempilement représentée sur la figure 7;

— la figure 9 montre un troisième mode de réalisation du calculateur d'une caméra à scintillation conforme à l'invention, incluant un troisième mode de réalisation de l'étage de traitement des événements;

— les figures 10 à 12 montrent, en correspondance aux figures 4, 8 et 9, les modifications du calculateur lorsqu'on n'utilise plus que trois voies de calcul X, Y, Z;

— les figures 13 à 15 montrent de même, en correspondance aux figures 4, 8 et 9, les modifications du calculateur lorsqu'on n'utilise plus que trois voies de calcul X, Y, E.

Dans les caméras à scintillation munies de p voies d'acquisition utilisant des circuits convertisseurs-intégrateurs tels que les dispositif décrit dans la demande de brevet français FR—A—2 540 995, celui décrit dans la demande de brevet français FR—A—2 552 233 ou dans EP—A—252566 publie le 13/01/88, les signaux obtenus en sortie des voies d'acquisition sont une mesure de la charge des impulsions électriques fournies par les tubes photomultiplicateurs respectifs en réponse à une scintillation.

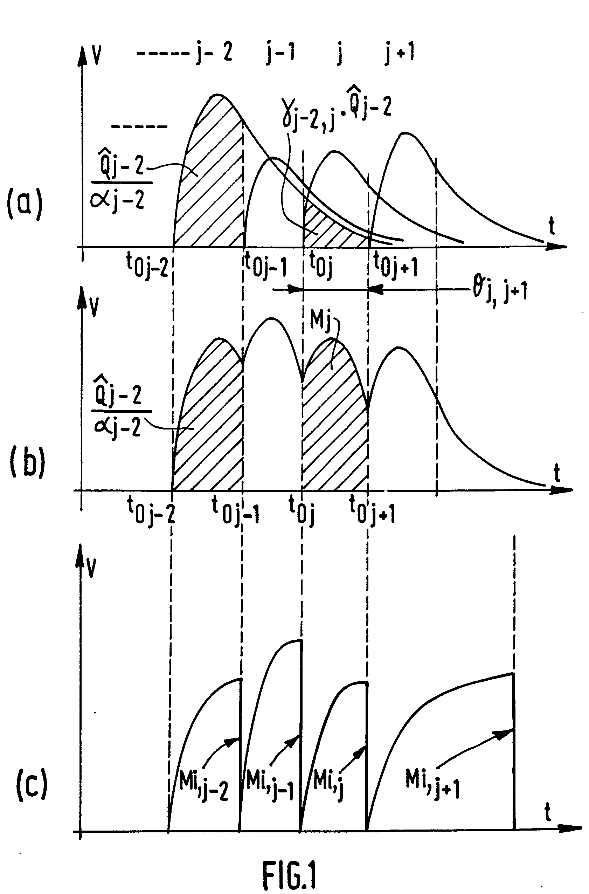

Par exemple, en l'absence d'effet d'empilement, la voie d'acquisition i (i variant de 1 à p) fournirait un signal $S_{ij}$ en réponse à une scintillation j survenant en un point $x_j$, $y_j$ du cristal scintillateur. S'il y a au contraire empilement d'événements comme l'illustre à titre d'exemple la figure 1a qui montre des signaux individuels correspondant à des scintillations rapprochées entraînant un empilement partiel, le signal $M_{ij}$ (voir la figure 1c qui montre la forme des signaux $M_{ij}$ successifs), fourni par la voie d'acquisition i pour un événement j et mesuré à la fin de l'intervalle de temps $\theta_{j,j+1} = t_{o,j+1} - t_{o,j}$ pendant lequel cet événement j n'est perturbé ni par les événements précédents ni par les événements suivants, n'est plus $S_{ij}$ mais un signal fonction de $S_{ij}$ et des valeurs $S_{ik}$ (k = j−1, j−2, ..., j−q+1, j−q) correspondant aux q événements précédents qui participient aux perturbations de l'événement j.

Plus précisément, on peut montrer que, pour chacune des voies d'acquisition, le signal mesuré $M_{ij}$ est de la forme théorique suivante:

$$M_{ij} = \frac{S_{ij}}{\alpha_j} + \sum_{k=j-1}^{k=j-q} \gamma_{kj} \, S_{ik} \qquad (16)$$

Dans cette relation (16), les coefficients $\alpha_j$ et $\gamma_{ki}$ sont des coefficients de correction, prédéterminés à partir de la connaissance de la forme moyenne, en fonction du temps des impulsions analogiques fournies à l'entrée des voies d'acquisition. Les coefficients $\alpha_j$, obtenus par extrapolation, sont seulement fonction de l'intervale de temps $\theta_{j,j+1}$ de la mesure. Ces coefficients $\alpha_j$, supérieurs à 1, tendraient donc vers la valeur 1 si la durée de l'intervalle de mesure $\theta_{j,j+1}$ devenait très grande. Les coefficients $\gamma_{kj}$, obtenus par interpolation, sont fonction de l'intervalle de temps $\theta_{kj}$ séparant chaque événement précédent $j-1$, $j-2$, etc. ... de l'événement j et exprimé par la relation $\theta_{kj} = t_{o,j} - t_{o,k}$ avec $k = j-1$, $j-2$, ..., $q-1$, q. Ces coefficients $\gamma_{kj}$, inférieurs à 1, tendraient vers la valeur 0 si la durée des intervalles $\theta_{kj}$ devenait très grande.

Sur la figure 1a, la charge électrique à déterminer, qui serait notée $Q_j$ et qui est proportionelle à la quantité de courant débité pendant la durée $\theta_{j,j+1}$ du signal individuel associé à l'événement j, est estimée à partir de la mesure $M_{ij}$ effectuée pendant cette durée et à partir des q charges $Q_k$ précédemment estimées. La figure 1b montre le signal somme, ou signal composite, résultant de l'empilement des signaux individuels (de la figure 1a) correspondant à plusieurs scintillations rapprochées dans le temps. La figure 1c montre, on l'a vu, la forme des signaux $M_{i,j}$ successifs.

Lorsqu'on considère le cas de l'absence d'empilement, le calculateur présent dans la caméra, qui permet notamment, on l'a vu, d'évaluer l'énergie $E_j$ de chaque événement j à partir des signaux fournis par les p voies d'acquisition, effectue ce calcul à l'aide de la somme pondérée suivante (relation (3) déjà nommée):

$$E_j = \sum_{i=1}^{i=p} G_i S_{ij}$$

S'il y a au contraire empilement d'événements, la quantité $E_{m,j}$ est donnée par:

$$E_{mj} = \sum_{i=1}^{i=p} G_i M_{ij} \tag{17}$$

ou encore, d'après la relation (16):

$$E_{ij} = \frac{E_j}{\alpha_j} + \sum_{k=j-1}^{k=j-q} \gamma_{kj} E_k \tag{18}$$

Pour l'évaluation des coordonnées $x_j$, $x_j$ de chaque événement j par le calculateur à partir des signaux fournis par les p voies d'acquisition, et ce indépendamment du fait qu'il y ait ou non un empilement d'événements, on introduit donc, conformément à l'invention, un seuil noté $m_{oj}$ et variable d'un événement à l'autre.

De la sorte, le calculateur réalise dans un premier temps les somme pondérées suivantes:

$$X_{mj} = \sum_{i=1}^{i=p} K_i(M_{ij} - m_{oj}) \tag{19}$$

$$Y_{mj} = \sum_{i=1}^{i=p} H_i(M_{ij} - m_{oj}) \tag{20}$$

$$Z_{mj} = \sum_{i=1}^{i=p} J_i M_{ij} \tag{21}$$

avec $M_{ij} - m_{oj} = 0$ si $M_{ij}$ est inférieur ou égal à $m_{oj}$. Dans ces relations (19) à (21) les facteurs de pondération sont par exemple les mêmes que précédemment.

On peut montrer que la valeur du seuil $m_{oj}$ est avantageusement — sans bien entendu que ce soit le seul choix possible — prise proportionnelle à la valeur $E_{mj}$ obtenue à l'aide des relations (17) et (18). Le facteur de proportionalité est appelé $f_o$ et est exprimé en V/eV si $m_{oj}$ est une tension et si $E_{mj}$ est exprimé en électron-volts, et l'on a donc:

$$m_{oj} = f_o \cdot E_{mj}$$

$$m_{oj} = f_o \cdot \left( \frac{E_j}{\alpha_j} + \sum_{k=j-1}^{k=j-q} \gamma_{kj} E_k \right) \tag{22}$$

De cette expression, il résulte qu'en cas d'absence d'empilement correspondant aux valeurs $\alpha_j = 1$ et $\gamma_{kj} =$

6

0, le seuil, qualifié d'asservi, prend la valeur $s_{oj} = f_o.E_j$, et les signaux fournis par les p voies d'acquisition sont les signaux $S_{ij}$. Dans ces conditions, (absence d'empilement), les relations (19), (20), (21) s'écrivent maintenant:

$$X_j = \sum_{i=1}^{i=p} K_i (S_{ij}-s_{oj}) \qquad (23)$$

$$Y_j = \sum_{i=1}^{i=p} H_i (S_{ij}-s_{oj}) \qquad (24)$$

$$Z_j = \sum_{i=1}^{i=p} J_i S_{ij} \qquad (25)$$

Les sommes pondérées ne sont pas entachées d'erreurs dues à l'empilement, et le calcul des coordonnées selon les relations (1) et (2) est immédiat.

Lorsqu'au contraire il y a empilement des événements, compte tenu des expressions (16), (22) et (23) à (25) les sommes pondérées (19) à (21) peuvent maintenant être exprimés de la façon suivante:

$$X_{mj} = \frac{X_j}{\alpha_j} + \sum_{k=j-1}^{k=j-q} \gamma_{kj} X_k \qquad (26)$$

$$Y_{mj} = \frac{Y_j}{\alpha_j} + \sum_{k=j-1}^{k=j-q} \gamma_{kj} Y_k \qquad (27)$$

$$Z_{mj} = \frac{Z_j}{\alpha_j} + \sum_{k=j-1}^{k=j-q} \gamma_{kj} Z_k \qquad (28)$$

Après cette opération de sommation pondérée réalisée dans un premier temps, une deuxième opération consiste à effectuer un traitement des événements empilés de façon à determiner, à partir des sommes pondérées (26) à (28), les véritables coordonnées $x_j$, $y_j$ de chaque scintillation. Ce traitement est réalisable selon différents modes de réalisation qui vont être décrits plus loins, au cours de la description d'exemples de caméra à scintillation selon l'invention.

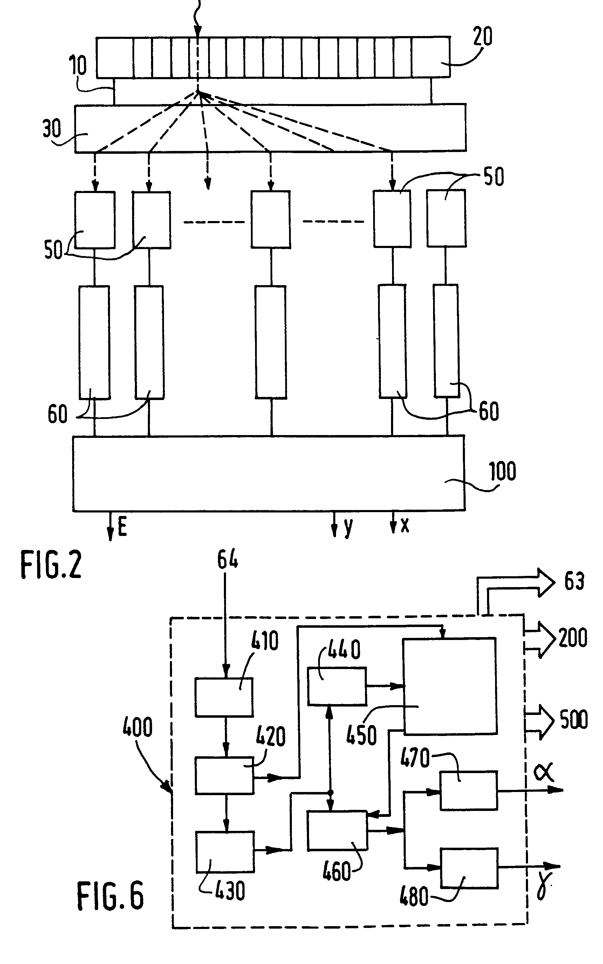

On rappellera préalablement la structure d'une caméra à scintillation de type classique. Une telle caméra, représentée sur la figure 2, comprend un cristal scintillateur 10 équipé d'un collimateur 20 et destiné à convertir chaque photon reçu en une scintillation. Ce cristal est couplé par l'intermédiaire d'un guide de lumière 30 à la fenêtre d'entrée d'un jeu de p photodétecteurs constitué ici par des tubes photomultiplicateurs 50. Ces tubes 50 convertissent chaque scintillation en un courant qui est alors traité par p voies d'acquisition 60 entièrement analogiques. Ces voies d'acquisition 60 réalisent notamment l'amplification, le filtrage, l'intégration et la mise en forme des signaux de sortie des tubes photomultiplicateurs 50, et sont suivies d'un calculateur 100 fournissant les coordonnées $x_j$, $Y_j$ et l'énergie $E_j$.

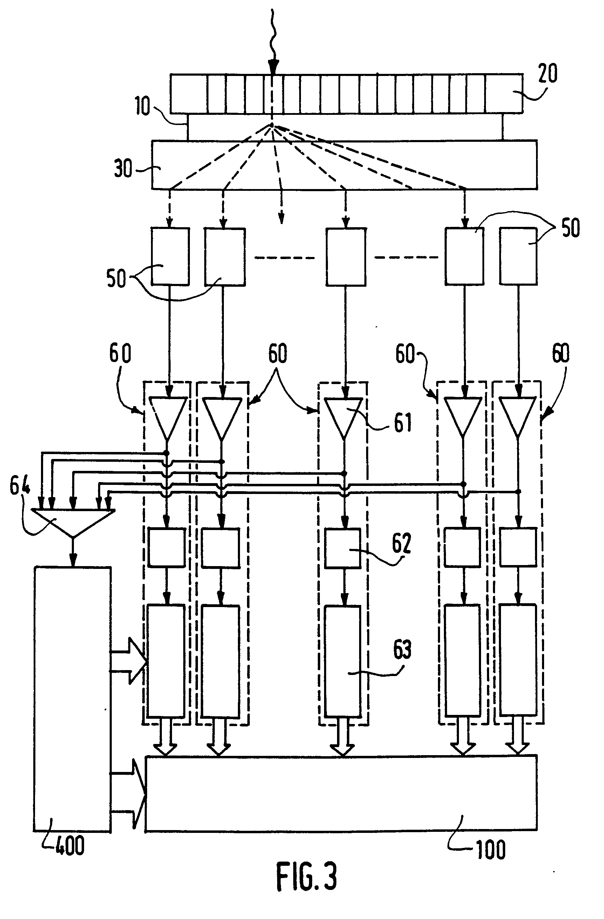

Selon le mode de réalisation qui va être maintenant plus particulièrement décrit, en correspondance à la figure 3 montrant par rapport à la figure 2 les modifications du schéma de principe pour une caméra selon l'invention, les p voies d'acquisition 60 ne sont plus totalement analogiques comme dans la caméra classique décrite. Ces voies fournissent maintenant p signaux numériques $M_{i,j}$ (i = indice variant de 1 à p) à l'entrée du calculateur 100, et réalisent maintenant successivement l'amplification, le filtrage et l'échantillonnages des signaux de sortie des tubes photomultiplicateurs 50 puis la conversion analogique-numérique des échantillons obtenus et la sommation de ces échantillons numériques. La valeur de ces p signaux numériques est liée à celle du courant de sortie des tubes 50 et donc à une fraction de l'intensité de la scintillation initiale, mais différemment selon le taux d'empilement des scintillations (cette fraction est elle-même liée à la réalisation du bloc optique et en particulier à la distance entre le point de scintillation et l'axe des tubes). S'il n'y avait pas d'empilement, la valeur de chacun de ces signaux serait notée $S_{i,j}$; l'estimation de ces valeurs en présence d'empilement sera notée $S_{i,j}$.

Chacune de ces p voies comprend en série, pour réaliser les fonctions citées ci-dessus, un circuit 61 d'amplification et de filtrage recevant la sortie du tube 50 correspondant, un circuit de réalignement temporel 62, puis un dispositif de conversion et d'intégration 63 assurant successivement l'échantillonnage des signaux de sortie du circuit 62 correspondant, la conversion analogique-numérique des échantillons obtenus et la sommation de ceux-ci. Il est en outre prévu un amplificateur analogique de sommation 64 dont les p entrée reçoivent les p sorties des circuits d'amplification et de filtrage 61 et dont la sortie est fournie à un détecteur de début d'impulsion localisé dans l'étage de détection, séquencement et stockage 400 décrit plus loin.

La sortie de chacun des p dispositifs de conversion et d'intégration est envoyée vers la calculateur 100, éventuellement par l'intermédiaire de p mémoires dites FIFO (de l'anglais "First-In, First-Out") permettant de travailler ultérieurement à des fréquences plus faibles en régularisant le débit des événements. Cette disposition de mémoires FIFO permet en effet une réduction de la vitesse des calculs ultérieurs et le rythhme plus lent ainsi obtenu peut être pratiquement égal au rythme moyen d'arrivée des événements (par exemple 2 microsecondes pour un rythme moyen de 500.000 événements par second) et non plus au rythme aléatoire d'arrivée des événements (environ 0,2 microseconde dans l'exemple précédent). Chacun français FR—A—2 552 233 ou dans EP—A—252566 publié le 13/01/88, et les opérations effectuées par ces dispositifs sont contrôlées par l'étage de détection, séquencement et stockage 400.

dispositifs sont contrôlées par l'étage de détection, séquencement et stockage 400.

Le calculateur 100 recevant les p sorties des voies d'acquisition comprend lui-même différents dispositifs de calcul qui vont permettre de déterminer distinctement les cordonnées $x_j$, $y_j$ et l'énergie $E_j$ de toute scintillation j, par exemple à l'aide des relations (1) à (6) dans le cas d'un dispositif de calcul barycentrique à rapport arithmétique.

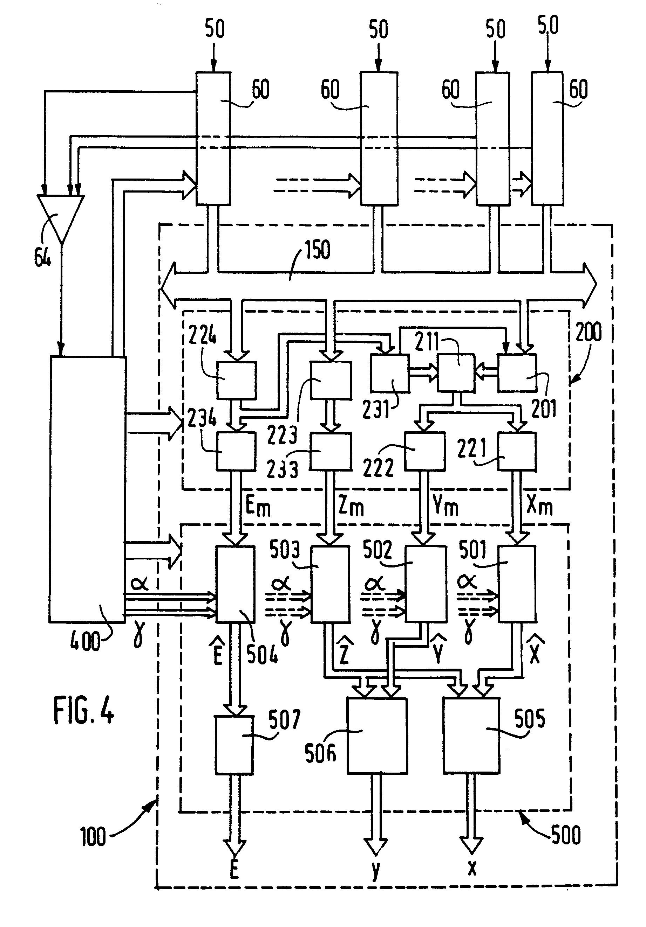

Plus précisément, ce calculateur 100, représenté sur la figure 4 dans le cas d'un dispositif de calcul barycentrique à rapport arithmétique, est agencé de la façon suivante. Il comprend tout d'abord un bus de transfert 150 des signaux numériques $M_{i,j}$ disponibles en sortie des p voies d'acquisition. Pour l'une de ces voies, par exemple la voie i, on a représenté les signaux analogiques individuels associées à plusieurs scintillations rapprochées dans le temps (figure 1a) et le signal résultant de l'empilement de ces signaux individuels (figure 1b), l'événement j étant perturbé en amont par plusieurs événements $j-1$, $j-2$, etc.... Si $\alpha_j$ et $\gamma_{k,j}$ sont les coefficients de correction respectivement par extrapolation et par interpolation qui, on l'a vu, peuvent être déterminés à partir de la connaissance de la forme moyenne, en fonction du temps, des impulsions correspondant à un événement détecté et à partir de la mesure de la durée $\theta_{j,j+1}$ comprise entre $t_{o,j}$ et $t_{o,j+1}$ si k est successivement égal à $j-1$, $j-2$, ..., $j-q$, et si les signaux $S_{ik}$ représentent pour ces valeurs respectives de k les valeurs corrigées des effets d'empilement qui seraient fournies par la voie d'acquisition numérique i en réponse aux scintillations $j-1$, $j-2$, ..., $j-q$, alors les signaux numériques obtenus en sortie des voies d'acquisition sont de la forme:

$$M_{i,j} = \frac{\hat{S}_{ij}}{\alpha_j} + \sum_{k=j-1}^{k=j-q} \gamma_{k,j}\,\hat{S}_{i,k} \qquad (29)$$

où $M_{i,j}$ représente la valeur mesurée à l'instant $t_{o,j+1}$ résultant de la sommation des échantillons pendant l'intervalle de temps $\theta_{j,j+1}$ pour la voie i.

Le calculateur comprend ensuite, en sortie du bus de transfert 150, un étage de sommation numérique 200. Comme indiqué sur la figure 4, qui montre un premier exemple de réalisation du calculateur selon l'invention, cet étage de sommation numérique 200 comprend tout d'abord deux dispositifs de sommation pondérée numérique 223 et 224 qui réalisent les sommations pondérées suivantes:

$$Z_{m,j} = \sum_{i=1}^{i=p} J_i\,M_{ij} \qquad (30)$$

$$E_{m,j} = \sum_{i=1}^{i=p} G_i\,M_{ij} \qquad (31)$$

La grandeur $E_{m,j}$ est utilisée par un calculateur de seuil 231 qui peut être un multiplicateur de cette grandeur par le facteur $f_o$ (déterminé expérimentalement et mémorisé) et qui délivre sur la sortie la valeur du seuil asservi $m_{oj}$.

L'étage 200 comprend également une mémoire tampon 201 qui reçoit les p signaux de sortie du bus de transfert 150 et est destinée à retarder ces p signaux pour laisser s'effectuer préalablement les opérations des circuits 224 et 231. La commande de lecture de la mémoire 201 est fournie, comme indiqué sur la figure 4, par le calculateur de seuil 231, et la sortie de cette mémoire 201 est alors envoyée vers un circuit soustracteur de seuil 211 qui reçoit, sur une première entrée, les p signaux $M_{ij}$ retardés par la mémoire tampon 201 et, sur une deuxième entrée, la valeur du seuil asservi $m_{oj}$. Les signaux de sortie du soustracteur sont les signaux $M_{ij}-m_{oj}$.

L'étage 200 comprend enfin deux autres dispositifs de sommation pondérée numérique 221 et 222 qui réalisent respectivement les sommations pondérées suivantes:

$$X_{m,j} = \sum_{i=1}^{i=p} K_i(M_{ij}-m_{oj}) \qquad\qquad (32)$$

$$Y_{m,j} = \sum_{i=1}^{i=p} H_i(M_{ij}-m_{oj}) \qquad\qquad (33)$$

Chacun de ces quatre dispositifs de sommation pondérée numérique 221 à 224 est par exemple du type du multiplier-accumulateur TDC 1009 (commercialisé par la société TRW, La Jolla, CA 92038, USA), dont l'une des entrées reçoit la sortie correspondante $M_{ij}$ ou $M_{ij}-m_{oj}$ selon le cas, et dont l'autre reçoit les coefficients de pondération sous forme numérique, stockés dans une mémoire auxiliaire. Dans le cas où l'on utilise effectivement ce type de multiplieur-accumulateur, ladite mémoire auxiliaire, qui doit être synchronisée avec le fonctionnement d'ensemble du calculateur, peut être par exemple incorporée à l'étage de détection, séquencement et stockage 400 décrit plus loin.

Les signaux de sortie $X_{mj}$, $Y_{mj}$, $Z_{mj}$, $E_{mj}$ disponibles en sortie de l'étage de sommation numérique 200, provenant des quatre dispositifs de sommation pondérée numérique 221 à 224 soit directement pour les deux premiers de ces signaux, soit par l'intermédiaire de circuits de réalignement temporel 233 et 234 pour les deux autres, sont alors fournis à un étage de traitement des événements 500. Cet étage 500 comprend, comme indiqué sur la figure 4, quatre circuits de calcul de désempilement 501 à 504, deux diviseurs 505 et 506 et un circuit de réalignement temporel 507. Les quatre circuits 501 à 504 étant identiques, on ne décrit ici que l'un d'eux, par exemple le circuit 501.

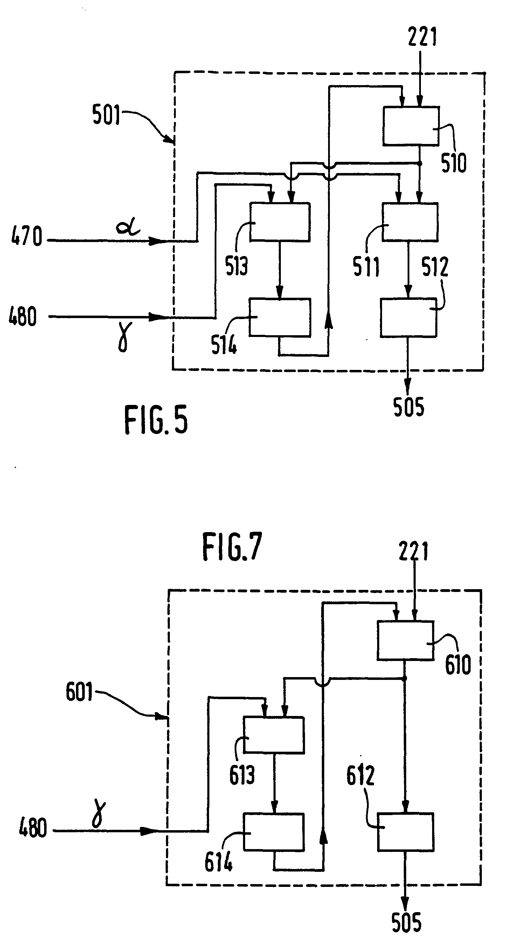

Ce circuit, représenté sur la figure 5, comprend un soustracteur 510 recevant sur la première entrée positive la sortie du dispositif de sommation pondérée numérique correspondant 221 (aux dispositifs 221 à 224 correspondant respectivement les circuits 501 à 504). Le soustracteur 510 est suivi d'un premier multiplieur 511 et d'un registre de stockage 512 dont la sortie est celle du circuit 501. Le soustracteur 510 est également suivi, en parallèle sur les éléments 511 et 512, d'un deuxième multiplieur 513 et d'un deuxième registre de stockage 514. Ces multiplieurs peuvent être remplacés par un seul circuit de multiplication associé à un multiplexeur-démultiplexeur temporel. L'entrée négative du soustracteur 510 est reliée à la sortie du registre de stockage 514. La deuxième entrée du multiplieur 511 est reliée à la sortie d'une mémoire 470 stockant le coefficient $\alpha_j$ et celle du multiplieur 513 est reliée à la sortie d'une mémoire 480 stockant le coefficient $\gamma_{j,k}$. Les sorties $\hat{X}$, $\hat{Y}$, $\hat{Z}$, $\hat{E}$ des quatre circuits de calcul de désempilement 501 à 504 sont données, pour l'événement j, par les expressions:

$$\dot{X}_j = \alpha_j \left[ X_{m,j} - \sum_{k=j-1}^{k=j-q} \gamma_{k,j}\, \hat{X}_k \right] \qquad\qquad (34)$$

$$\dot{Y}_j = \alpha_j \left[ Y_{m,j} - \sum_{k=j-1}^{k=j-q} \gamma_{k,j}\, \hat{Y}_k \right] \qquad\qquad (35)$$

$$\dot{Z}_j = \alpha_j \left[ Z_{m,j} - \sum_{k=j-1}^{k=j-q} \gamma_{k,j}\, \hat{Z}_k \right] \qquad\qquad (36)$$

$$\dot{E}_j = \alpha_j \left[ E_{m,j} - \sum_{k=j-1}^{k=j-q} \gamma_{k,j}\, \hat{E}_k \right] \qquad\qquad (37)$$

Les éléments de chaque circuit 501 à 504, par exemple les éléments 510 à 514 du circuit 501, constituent un circuit de calcul de désempilement équivalent à ceui qui est décrit dans la demande FR—A—2 552 233 avec les références 120 à 160. Les trois autres circuits 502 à 504 comprennent les mêmes éléments que le circuit 501.

La sortie $\hat{X}$ du circuit de calcul de désempilement 501 est envoyée vers la première entrée du diviseur 505 et la sortie $\hat{Y}$ du circuit 502 vers la première entrée du diviseur 506. La deuxième entrée de chacun de ces diviseurs est constitue par la sortie $\hat{Z}$ du circuit de calcul de désempilement 503. Les trois sorties de l'étage de traitement, qui sont aussi celles du calculateur, sont constituées par la sortie $x_j = \hat{X}_j/\hat{Z}_j$ du diviseur 505, la sortie $x_j = \hat{Y}_j/\hat{Z}_j$ du diviseur 506 et la sortie $\hat{E}_j$ du circuit de réalignement temporel 507 prévu en sortie du circuit de calcul de désempilement 504.

A ces éléments est encore associé, dans le calculateur, l'étage de détection, séquencement et stockage 400. Cet étage 400, représenté sur la figure 6, comprend d'abord un détecteur de début d'impulsion 410, qui reçoit la sortie de l'amplificateur analogique de sommation 64 (voir les figures 3 et 4). Ce détecteur 410 est suivi d'un circuit d'horloge 420 qui génère des signaux périodiques assurant la commande d'un circuit de séquencement 450 et celle d'un compteur 430 de ces signaux d'horloge. Le nombre ainsi compté est soumis à un circuit de test 440 dont la sortie est envoyée vers le circuit de séquencement 450. Ce dernier assure la synchronisation des opérations effectuées dans les voies d'acquisition, dans l'étage 200 et dans l'étage 500, et valide le contenu d'un registre 460 de stockage de la sortie du compteur 430, registre qui est en parallèle sur le circuit de test 440. En sortie du registre 460 sont prévues les deux mémoires 470 et 480 mentionnées plus haut en référence à la figure 5 et stockant respectivement le coefficient $a_j$ et le coefficient $\gamma_{j,k}$. Les éléments 410 à 480 qui viennent d'être cités constituent un étage de détection, séquencement et stockage similaire à celui qui est décrit dans la demande FR—A—2 552 233.

Dans le premier mode de réalisation qui vient d'être décrit, la structure du calculateur a permis de déduire les sommes pondérées exactes $\hat{X}_j$, $\hat{Y}_j$, $\hat{Z}_j$ d'une part des valeurs calculées $X_{m,j}$, $Y_{m,j}$, $Z_{m,j}$ et d'autre part des coefficients $a_j$ et $\gamma_{k,j}$, en utilisant les formules (34) à (37).

Dans un deuxième mode de réalisation du calculateur, le calcul des coordonnées des événements peut être effectué sans introduire d'extrapolation, selon les expressions suivantes:

$$\hat{X}'_j = X_{m,j} - \sum_{k=j-1}^{k=j-q} \gamma_{k,j} \; X'_k \qquad (38)$$

$$\hat{Y}'_j = Y_{m,j} - \sum_{k=j-1}^{k=j-q} \gamma_{k,j} \; Y'_k \qquad (39)$$

$$\hat{Z}'_j = X_{m,j} - \sum_{k=j-1}^{k=j-q} \gamma_{k,j} \; Z'_k \qquad (40)$$

avec toujours $x_j = \hat{X}'_j/\hat{Z}'_j$ et $y_j = \hat{Y}'_j/\hat{Z}'_j$. Dans ce mode de réalisation, l'étage de traitement des événéments est maintenant référencé 600, et les trois circuits de calcul de désempilement qui reçoivent respectivement les signaux $X_m$, $Y_m$, $Z_m$, sont, par rapport à la figure 5, modifiés par suppression du multiplieur 511.

Ces trois circuits ont en effet la structure représentée sur la figure 7 pour l'un quelconque, par exemple le premier de ces trois circuit 601 à 603. Ce circuit 601 comprend un soustracteur 610 qui reçoit sur sa première entrée la sortie du dispositif de sommation pondérée numérique correspondant 221. Le soustracteur 610 est suivi d'une part directement d'un registre de stockage 612, dont la sortie est comme précédemment celle du circuit de calcul de sémpilement, et d'autre part, en parallèle, d'un multiplieur 613 puis d'un registre de stockage 614. La sortie de ce registre 614 est renvoyée vers la deuxième entrée du soustracteur 610, et l'autre entrée du multiplieur 613 est reliée à la sortie de la mémoire 480 prévue dans l'étage 400 pour le stockage du coefficient γ.

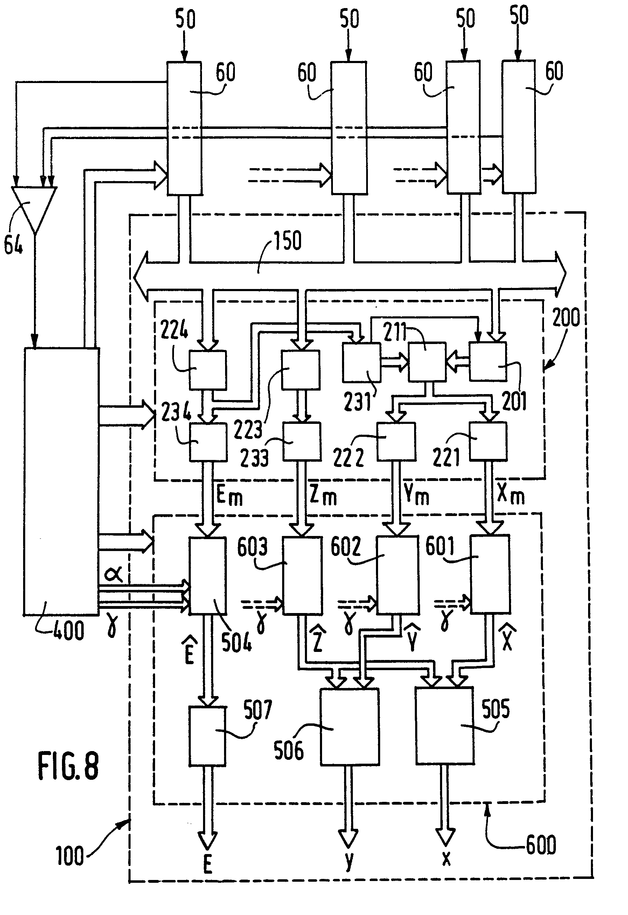

Les deux autres circuits 602 et 603 comprennent des éléments similaires. Le circuit de calcul de désempilement 504 restant inchangé, le calculateur 100 prend maintenant la configuration représentée sur la figure 8. L'énergie E est, comme prédédemment, disponible en sortie du circuit de réalignement temporel 507.

Dans le deuxième mode de réalisation qui vient d'être décrit, la structure du calculateur a permis cette fois de procéder d'abord par détermination de sommes pondérées sans extrapolation puis par calcul des coordonnées comme précédemment. Dans un troisième mode de réalisation, une autre variante de calculateur est proposée, dans laquelle on détermine d'abord des coordonnées $x_{mj}$, $y_{mj}$ dites mesurées, qui sont entachées d'erreurs du fait de l'empilement des événements:

$$x_{mj} = X_{m,j}/Z_{m,j} \qquad (41)$$

$$y_{mj} = Y_{m,j}/Z_{m,j} \qquad (42)$$

A cette détermination succède alors le calcul des coordonnées exactes de l'événement j, au moyen des expressions suivantes:

$$x_j = x_{mj} - \sum_{k=j-1}^{k=j-q} \Gamma_{kj} (x_k - x_{mj}) \qquad (43)$$

$$y_j = y_{mj} - \sum_{k=j-1}^{k=j-q} \Gamma_{kj} (y_k - y_{mj}) \qquad (44)$$

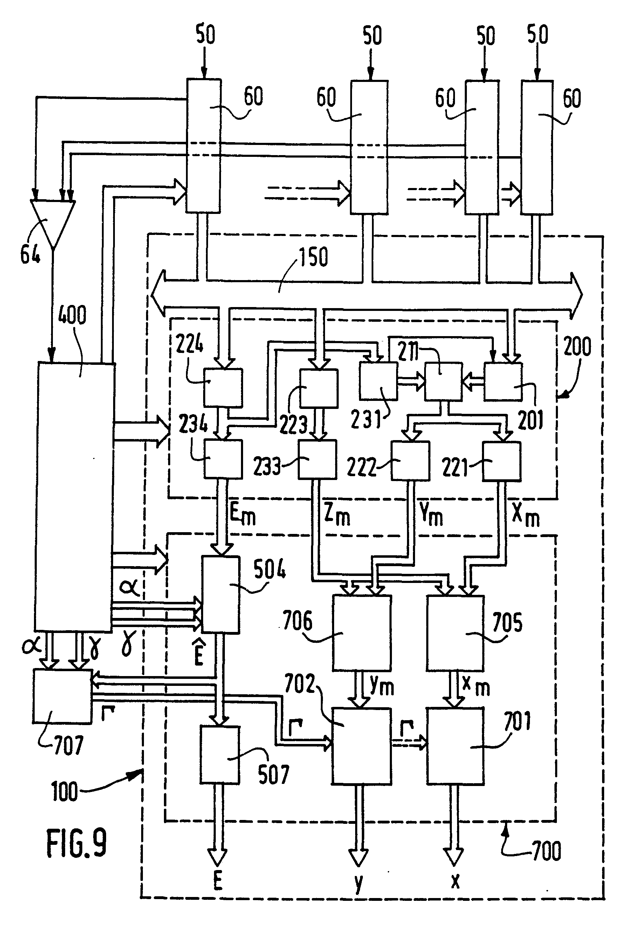

Plus précisément, dans ce troisième mode de réalisation de l'invention, représenté sur la figure 9, le calculateur 100 comprend un troisième type d'étage de traitement des événements, référencé 700. Dans cette variante de réalisation, le traitement de désempilement est effectué non plus sur les signaux $X_m$, $Y_m$, $Z_m$ de sortie de l'étage de sommation numérique 200 mais sur les coordonnées $x_{mj}$ et $Y_{mj}$ obtenues en sortie de deux diviseurs 705 et 706. Ce diviseur reçoit les signaux $X_m$ et $Z_m$ de sortie de l'étage de sommation numérique 200, et le diviseur 706 réçoit les signaux $Y_m$ et $Z_m$. Les coordonnées $x_j$, $y_j$ correspondant à l'événement j sont alors obtenues en sortie de circuits de calcui de désempilement 701 et 702, à partir d'une part de ces coordonnées dites mesurées et d'autre part des coordonnées déjà connues $x_k$, $y_k$ des événements précédents qui perturbent l'événement j, conformément aux expressions (43) et (44).

Les coefficients $\Gamma_{k,j}$, qui sont fonctions des intervalles de temps mesurés $\theta_{j,j+1}$, $\theta_{k,j}$ et des rapports $\hat{E}_k/\hat{E}_j$ sont calculés dans un circuit de calcul additionnel 707 qui reçoit d'une part la sortie E du circuit de calcul de désempilement 504, toujours présent dans l'étage de traitement, et d'autre part les coefficients α et γ délivrés par l'étage de détection, séquencement et stockage 400. Dans cet exemple, le circuit 707 calcule d'une part, à partir des valeurs de Ê sucessivement reçues, les rapports successifs $\hat{E}_k/\hat{E}_j$ et d'autre part les produits $\alpha_j\,\gamma_{k,j}$ à partir desquels sont évalués les coefficients $\Gamma_{k,j}$ selon la relation $\Gamma_{k,j} = \alpha_j\,\gamma_{k,j}\,\hat{E}_k/\hat{E}_j$. Ces coefficients $\Gamma_{k,j}$ sont fournis aux circuits de calcul de désempilement 701 et 702, qui ont une configuration similaire à celle des circuits 601 et 602. L'énergie E est, là encore comme précédemment, disponible en sortie du circuit de réalignement temporel 507.

Bien entendu, la présente invention n'est pas limitée aux exemples de réalisation décrits et représentés, à partir desquels d'autres variantes peuvent encore être proposées sans pour cela sortir du cadre de l'invention.

Par exemple, dans les trois modes de réalisation décrits, le calcul du seuil dans le circuit 231 peut être effectué à partir du signal $Z_m$ en lieu et place du signal $E_m$. Dans ce cas, la connexion d'entrée du calculateur de seuil 231 est alors reliée non plus à la sortie du dispositif 224 mais à celle du dispositif 223. D'autre part, un circuit de réjection en amplitude du nombre des événements à traiter peut être prévu, pour n'effectuer es calculs que sur des événements sélectionnés (à l'aide d'un seuil, d'une fenêtre d'énergie, etc. . . .).

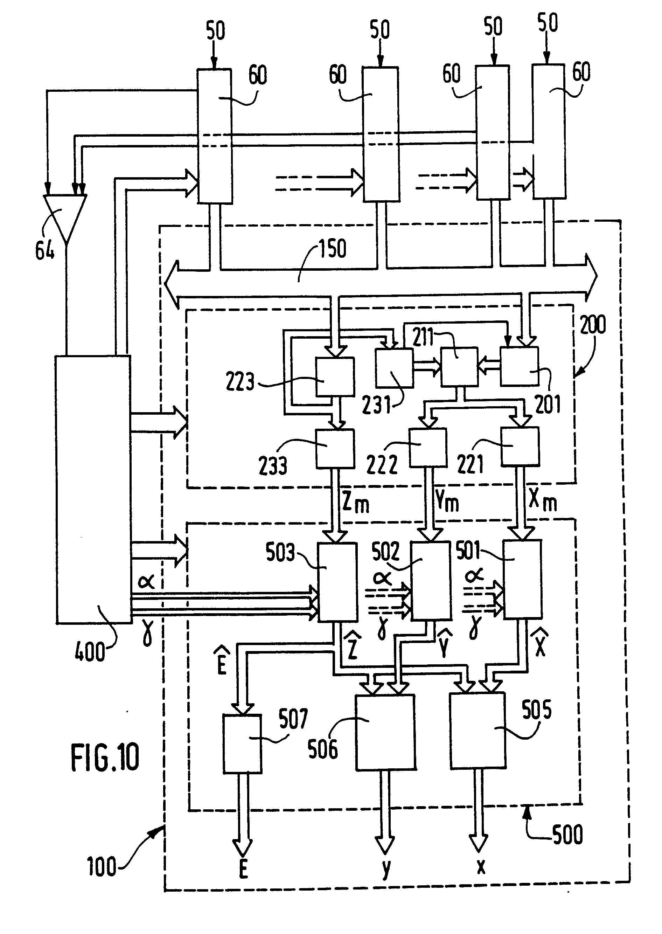

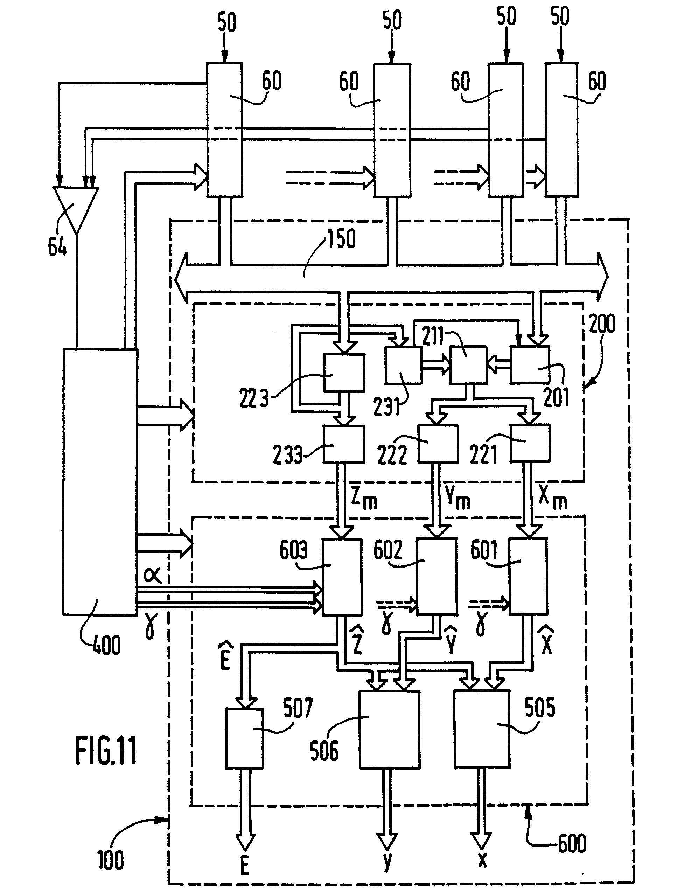

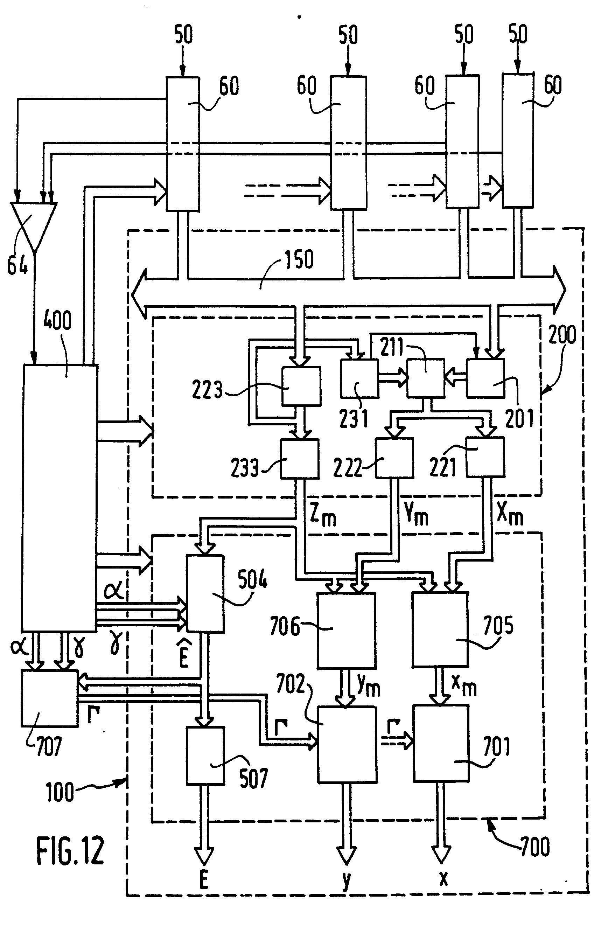

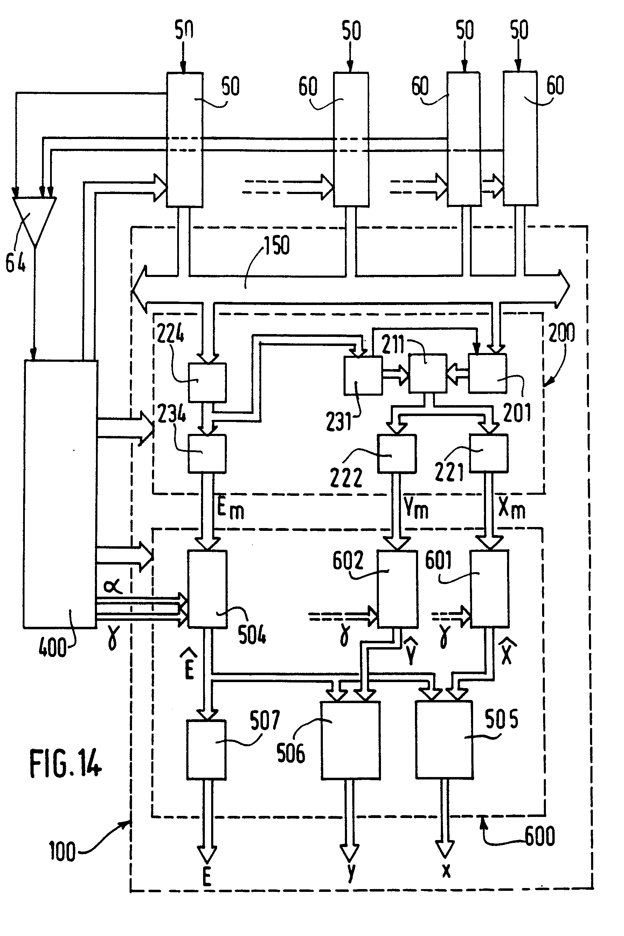

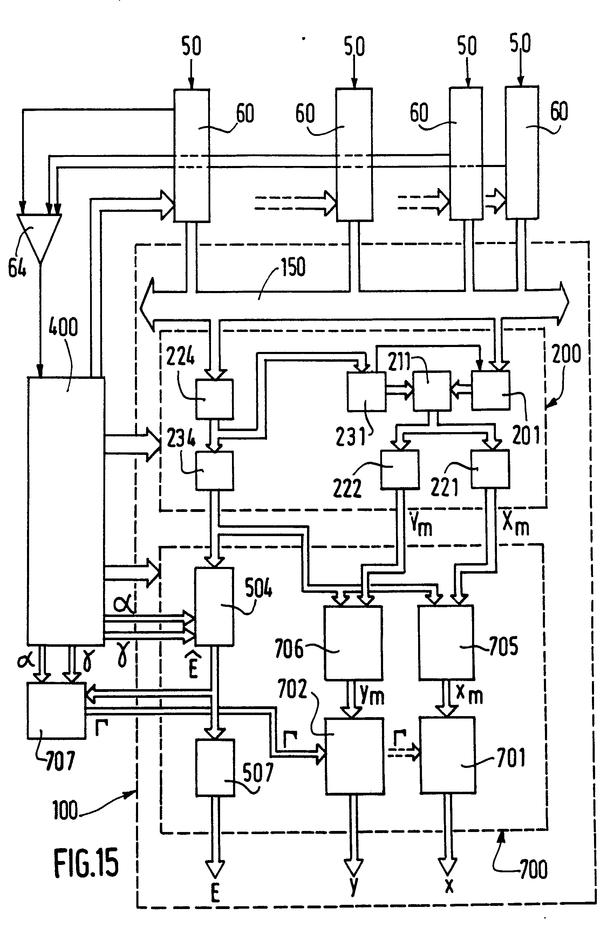

Par ailleurs, un multiplexeur temporel peut être prévu pour n'utiliser qu'un diviseur au lieu de deux dans chacun des modes de réalisation des figures 4, 8 et 9. Un circuit de multiplexage temporel peut également être prévu pour réduire le nombre des circuits de calcul de désempilement et n'utiliser qu'un seul circuit de calcul de désempilement au lieu de des quatre circuits 501 à 504 dans le cas du mode de réalisation de la figure 4, des quatre circuits 601 à 603 et 504 dans le cas du mode de réalisation de la figure 8, ou des trois circuits 701, 702 et 504 dans le cas du mode de réalisation de la figure 9. L'ensemble des variantes proposées dans ce paragraphe s'applique également aux autres modes de réalisation des figures 10 à 15 mentionnés ci-dessous.

Compte tenu des moyens de correction des défauts de linéarité et d'énergie qui sont mis en oeuvre dans les caméras gamma actuellement disponibles à partir des signaux x, y, E obtenus en sortie du calculateur, on sait en effet qu'il est possible d'utiliser indifféremment Z ou E pour le calcul des coordonnées. Dans ce cas on peut ne calculer qu'une seule des ces deux grandeurs et, selon le choix effectué, déduire l'autre grandeur de calculs faisant intervenir des corrections spécifiques de ce choix et exécutées par lesdits moyens.

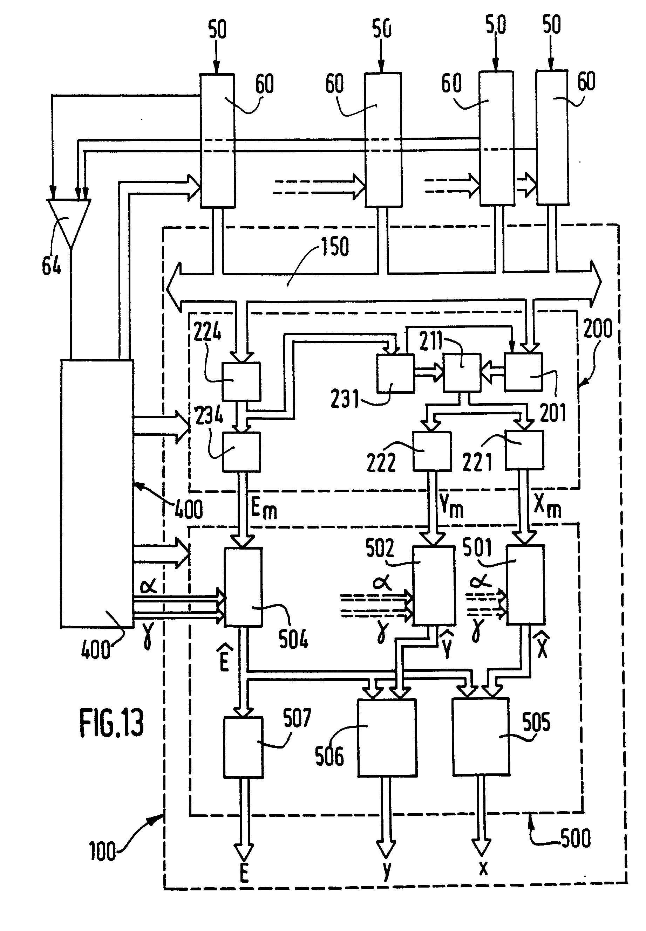

L'étage de sommation numérique 200 ne comprend plus alors que trois dispositifs de sommation pondérée numérique fournissant des signaux $X_m$, $Y_m$, $Z_m$ ou $X_m$, $Y_m$, $E_m$ respectivement, et de même l'étage de traitement des événements ne comprend plus que trois circuits de calcul de désempilement. Les figures 10 à 12 montrent, en correspondance aux figures 4, 8, 9 les modifications du calculateur lorsqu'on n'utilise plus que trois voies X, Y, Z, tandis que les figures 13 à 15 montrent, toujours en correspondance aux figures 4, 8, 9, les modifications du calculateur lorsqu'on n'utilise plus que trois voies X, Y, E.

D'autre part, on notera également qu'il est possible, pour travailler à des fréquences plus faibles en régularisant le débit des événements, d'introduire en amont de l'étage de sommation numérique des mémoires FIFO à écriture et lecture commandées par l'étage de détection, séquencement et stockage 400.

Enfin, il est équivalent de considérer que le bus 150 est incorporé au calculateur, dont il est l'élément d'entrée ou d'accès, ou qu'au contraire il lui est associé sans lui être inclus.

## Revendications

1. Caméra à scintillation comprenant un cristal scintillateur éventuellement équipé d'un collimateur et destiné à convertir chaque photon reçu en une scintillation, un guide de lumière pour le couplage dudit cristal à la fenêtre d'entrée d'un jeu de p photodétecteurs destinés à convertir en courant chaque scintillation, p voies d'acquisition recevant les signaux de sortie desdits photodétecteurs et délivrant p signaux électriques de caractéristiques liées notamment à l'intensité de la scintillation et à la distance de cette scintillation à chacun des photodétecteurs, et un calculateur destiné à délivrer les coordonnées $x_j$ et $y_j$ d'une scintillation j et l'énergie $E_j$ qui est associée à cet événement j, telle:

(A) que lesdites p voies d'acquisition réalisent l'amplification, le filtrage et l'échantillonnage desdits signaux de sortie des photodétecteurs, puis la conversion analogique-numérique des échantillons obtenus et leur sommation, et délivrent p signaux numériques à l'entrée du calculateur;

(B) que le calculateur comprend lui-même:

(a) un bus de transfert desdits p signaux numériques;

(b) un étage de sommation numérique comprenant lui-même:

— une mémoire-tampon recevant les p signaux de sortie $M_{ij}$ du bus de transfert;

— un circuit soustracteur de seuil recevant sur une première entrée lesdits p signaux, retardés par la mémoire-tampon, et sur une deuxième entrée une valeur $m_{oj}$ de seuil dit asservi et délivrant p signaux $M_{ij}$—$m_{oj}$, ces signaux prenant conventionnellement la valeur 0 si $M_{ij}$ est inférieur à $m_{oj}$;

— quatre dispositifs de sommation pondérée numérique dont les deux premiers reçoivent les p signaux $M_{ij}$—$m_{oj}$ délivrés par le circuit soustracteur de seuil et dont les deux autres reçoivent directement les p signaux de sortie $M_{ij}$ du bus de transfert;

— un calculateur de seuil recevant la sortie du quatrième dispositif de sommation pondérée numérique pour l'évaluation du seuil asservi $m_{oj}$ selon une relation de proportionalité à la valeur $E_{mj}$ associée à chaque événement j; ledit étage de sommation numérique délivrant les signaux $X_m$, j, $Y_{m,j}$, $Z_{m,j}$, $E_{m,j}$ suivants ($K_i$, $H_i$, $J_i$, $G_i$, étant des coefficients de pondération):

$$X_{m,j} = \sum_{i=1}^{i=p} K_i (M_{ij} - m_{oj})$$

$$Y_{m,j} = \sum_{i=1}^{i=p} H_i (M_{ij} - m_{oj})$$

$$Z_{m,j} = \sum_{i=1}^{i=p} J_i \, M_{ij}$$

$$E_{m,j} = \sum_{i=1}^{i=p} G_i \, M_{ij}$$

soit directement en sortie des deux premiers dispositifs de sommation pondérée numérique, pour les deux premiers de ces signaux, soit par l'intermédiaire de deux circuits de réalignement temporel prévus respectivement en sortie des deux autres dispositifs, pour les deux derniers de ces signaux;

(c) un étage de traitement des événements incluant des circuits de calcul de désempilement et deux diviseurs et délivrant à partir des signaux $X_{mj}$, $Y_{mj}$, $Z_{mj}$, $E_{mj}$ les trois signaux de coordonnées et d'énergie $x_j$, $y_j$, $E_j$ relatifs à l'événement j;

(C) qu'un étage de détection, séquencement et stockage recevant un signal qui correspond à la somme des p signaux de sortie des photodétecteurs est prévu pour délivrer d'une part les différents signaux d'horloge pour la synchronisation des éléments des p voies d'acquisition et des éléments du calculateur et d'autre part des coefficients de correction destinés à l'étage de traitement de sévénements.

2. Caméra à scintillation selon la revendication 1, caractérisée en ce que l'étage de traitement des événements comprend quatre circuits de calcul de désempilement, recevant pour chaque événement j respectivement les signaux numériques $X_{mj}$, $Y_{mj}$, $Z_{mj}$, $E_{mj}$, et délivrant quatre signaux $\hat{X}_j$, $\hat{Y}_j$, $\hat{Z}_j$, $\hat{E}_j$, et deux diviseurs délivrant respectivement deux signaux $x_j = \hat{X}_j/\hat{Z}_j$ et $y_j = \hat{Y}_j/\hat{Z}_j$, les trois signaux $x_j$, $y_j$, $E_j$ étant constitués par les signaux de sortie respectivement du premier diviseur, du deuxième diviseur et d'un circuit de réalignement temporel recevant la sortie du quatrième circuit de calcul de désempilement, et en ce que les coefficients de correction sont des coefficients de correction par extrapolation et interpolation, a et γ respectivement, destinés auxdits quatre circuits de calcul de désempilement.

3. Caméra à scintillation selon la revendication 2, caractérisée en ce que chacun des quatre circuits de calcul de désempilement comprend un soustracteur recevant sur sa première entrée la sortie correspondante de l'étage de sommation numérique, ce soustracteur étant suivi d'une part d'un premier multiplieur et d'un premier registre de stockage, et d'autre part, en parallèle sur ce premier multiplieur et ce premier registre, d'un deuxième multiplieur et d'un deuxième registre de stockage, la sortie de ce deuxième registre étant reliée à la deuxième entré du soustracteur et les deuxièmes entrées des premier et deuxième multiplieurs étant reliées la première à la sortie de la mémoire de stockage du coefficient a et la seconde à la sortie de la mémoire de stockage du coefficient γ.

4. Caméra à scintillation selon la revendication 3, caractérisée en ce que les multiplieurs sont remplacés par un seuil circuit de multiplication associé à un multiplexeur-démultiplexeur temporel.

5. Caméra à scintillation selon la revendication 2, caractérisée en ce que chacun de trois premiers circuits de calcul de désempilement comprend un soustracteur recevant sur sa première entrée la sortie correspondante de l'étage de sommation, suivi d'une part d'un troisième registre de stockage dont la sortie est celle du circuit de calcul de désempilement et d'autre part, en parallèle, d'un troisième multiplieur puis d'un quatrième registre de stockage, la sortie de ce quatrième registre étant reliée à la deuxième entrée du soustracteur et l'autre entrée du troisième multiplieur étant reliée à la sortie de la mémoire de stockage du coefficient γ.

6. Caméra à scintillation selon la revendication 1, caractérisée en ce que l'étage de traitement des événements comprend trois circuits de calcul de désempilement, deux diviseurs, un circuit de réalignement temporel, et un circuit de calcul additionnel, les deux diviseurs recevant les signaux $X_{mj}$, $Y_{mj}$, $Z_{mj}$ pour délivrer deux signaux $x_{mj} = X_{mj}/Z_{mj}$ et $y_{mj} = Y_{mj}/Z_{mj}$, les premier et deuxième circuits de calcul de désempilement recevant lesdits signaux $x_{mj}$, $y_{mj}$ et délivrant les signaux $x_j$, $y_j$ et le troisième recevant le

signal $E_{mj}$ et délivrant le signal $\hat{E}$, et le circuit de calcul additionnel recevant d'une part ledit signal $\hat{E}$ et d'autre part lesdits coefficients de correction pour fournir aux premier et deuxième circuits de calcul de désempilement un coefficient de correction additionnel $\Gamma$.

7. Caméra à scintillation comprenant un cristal scintillateur éventuellement équipé d'un collimateur et destiné à convertir chaque photon reçu en une scintillation, un guide de lumière pour le couplage dudit cristal à la fenêtre d'entrée d'un jeu de p photodétecteurs destinés à convertir en courant chaque scintillation, p voies d'acquisition recevant les signaux de sortie desdits photodétecteurs et délivrant p signaux électriques de caractéristiques liées notamment à l'intensité de la scintillation et à la distance de cette scintillation à chacun des photodétecteurs, et un calculateur destiné à délivrer les coordonnées $x_j$ et $y_j$ d'une scintillation j et l'énergie $E_j$ qui est associée à cet événement j, telle:

(A) que lesdites p voies d'acquisition réalisent l'amplification, le filtrage et l'échantillonnage desdits signaux de sortie des photodétecteurs, puis la conversion analogique-numérique des échantillons obtenus et leur sommation, et délivrent p signaux numériques à l'entrée du calculateur;

(B) que le calculateur comprend lui-même:

(a) un bus de transfert desdits p signaux numériques;

(b) un étage de sommation numérique comprenant lui-même:

— une mémoire-tampon recevant les p signaux de sortie $M_{ij}$ du bus de transfert;

— Un circuit soustracteur de seuil recevant sur une première entrée lesdits p signaux, retardés par la mémoire-tampon, et sur une deuxième entrée une valeur $m_{oj}$ de seuil dit asservi et délivrant p signaux $M_{ij}{-}m_{oj}$, ces signaux prenant conventionellement la valeur O si $M_{ij}$ est inférieur à $m_{oj}$;

— trois dispositifs de sommation pondérée numérique dont les deux premiers reçoivent les p signaux $M_{ij}{-}m_{oj}$ délivrés par le circuit soustracteur de seuil et dont le dernier reçoit directement les p signaux de sortie $M_{ij}$ du bus de transfert;

— un calculateur de seuil recevant la sortie dudit dernier dispositif de sommation pondérée numérique pour l'évaluation du seuil asservi $m_{oj}$ selon une relation de proportionalité à la valeur $E_{mj}$ associée à chaque événement j;

ledit étage de sommation numérique délivrant les signaux $X_{m,j}$, $Y_{m,j}$, $Z_{m,j}$ suivants ($K_i$, $H_i$, $J_i$, étant des coefficients de pondération):

$$X_{m,j} = \sum_{i=1}^{i=p} K_i(M_{ij}-m_{oj})$$

$$Y_{m,j} = \sum_{i=1}^{i=p} H_i(M_{ij}-m_{oj})$$

$$Z_{m,j} = \sum_{i=1}^{i=p} J_i M_{ij}$$

soit directement en sortie des premier et deuxième dispositifs de sommation pondérée numérique, pour les deux premiers de ces signaux, soit par l'intermédiaire d'un circuit de réalignement temporel prévu en sortie du dernier dispositif, pour le dernier de ces signaux;

(c) un étage de traitement des événements incluant des circuits de calcul de désempilement et deux diviseurs et délivrant à partir des signaux $X_{mj}$, $Y_{mj}$, $Z_{mj}$, les trois signaux de coordonnées et d'énergie $x_j$, $y_j$, $E_j$ relatifs à l'événement j;

(C) qu'un étage de détection, séquencement et stockage recevant un signal qui correspond à la somme des p signaux de sortie des photodétecteurs est prévu pour délivrer d'une part les différents signaux d'horloge pour la synchronisation des éléments des p voies d'acquisition et des éléments du calculateur et d'autre part des coefficients de correction destinés à l'étage de traitement des événements.

8. Caméra à scintillation comprenant un cristal scintillateur éventuellement équipé d'un collimateur et destiné à convertir chaque photon reçu en une scintillation, un guide de lumière pour le couplage dudit cristal à la fenêtre d'entrée d'un jeu de p photodétecteurs destinés à convertir en courant chaque scintillation, p voies d'acquisition recevant les signaux de sortie desdits photodétecteurs et délivrant p signaux électriques de caractéristiques liées notamment à l'intensité de la scintillation et à la distance de cette scintillation à chacun des photodétecteurs, et un calculateur destiné à délivrer les coordonnées $x_j$ et $y_j'$ d'une scintillation j et l'énergie $E_j$ qui est associée à cet événement j, telle:

(A) que lesdites p voies d'acquisition réalisent l'amplification, le filtrage et l'échantillonnage desdits signaux de sortie des photodétecteurs, puis la conversion analogique-numérique des échantillons obtenus et leur sommation, et délivrent p signaux numériques à l'entrée du calculateur;

(B) que le calculateur comprend lui-même:

(a) un bus de transfert desdits p signaux numériques;

(b) un étage de sommation numérique comprenant lui-même:

— une mémoire-tampon recevant les p signaux de sortie $M_{ij}$ du bus de transfert;

— un circuit soustracteur de seuil recevant sur une première entrée lesdits p signaux, retardés par la mémoire-tampon, et sur une deuxième entrée une valeur $m_{oj}$ de seuil dit asservi et délivrant p signaux $M_{ij}-m_{oj}$, ces signaux prenant conventionnellement la valeur O si $M_{ij}$ est inférieur à $m_{oj}$;

— trois dispositifs de sommation pondérée numérique dont les deux premiers reçoivent les p signaux $M_{ij}-m_{oj}$ délivrés par le circuit soustracteur de seuil et dont le dernier reçoit directement les p signaux de sortie $M_{ij}$ du bus de transfert;

— un calculateur de seuil recevant la sortie dudit dernier dispositif de sommation pondérée numérique pour l'évaluation du seuil asservi $m_{oj}$ selon une relation de proportionalité à la valeur $E_{mj}$ associée à chaque événement j;

ledit étage de sommation numérique délivrant les signaux $X_{m,j}$, $Y_{m,j}$, $E_{m,j}$ suivants ($K_i$, $H_i$, $G_i$, étant des coefficients de pondération):

$$X_{m,j} = \sum_{i=1}^{i=p} K_i (M_{ij}-m_{oj})$$

$$Y_{m,j} = \sum_{i=1}^{i=p} H_i (M_{ij}-m_{oj})$$

$$E_{m,j} = \sum_{i=1}^{i=p} G_i M_{ij}$$

soit directement en sortie des premier et deuxième dispositifs de sommation pondérée numérique, pour les deux premiers de ces signaux, soit par l'intermédiaire d'un circuit de réalignement temporel prévu en sortie du dernier dispositif, pour le dernier de ces signaux;

(c) un étage de traitement des événements incluant des circuits de calcul de désempilement et deux diviseurs et délivrant à partir des signaux $X_{mj}$, $Y_{mj}$, $E_{mj}$ les trois signaux de coordonnées et d'énergie $x_j$, $y_j$, $E_j$ relatifs à l'événement j;

(C) qu'un étage de détection, séquencement et stockage recevant un signal qui correspond à la somme des p signaux de sortie des photodétecteurs est prévu pour délivrer d'une part les différents signaux d'horloge pour la synchronisation des éléments des p voies d'acquisition et des éléments du calculateur et d'autre part des coefficients de correction destinés à l'étage de traitement des événements.

9. Caméra à scintillation selon l'une des revendications 7 et 8, caractérisée en ce que l'étage de traitement des événements comprend trois circuits de calcul de désempilement, recevant respectivement lesdits signaux numériques, $X_{mj}$, $Y_{mj}$, $Z_{mj}$, ou $X_{mj}$, $Y_{mj}$, $E_{mj}$ respectivement, et délivrant trois signaux $\hat{X}_j$, $\hat{Y}_j$, $\hat{Z}_j$, ou $\hat{X}_j$, $\hat{Y}_j$, $\hat{E}_j$ respectivement, et deux diviseurs délivrant respectivement deux signaux $x_j = \hat{X}_j/\hat{Z}_j$ et $y_j = \hat{Y}_j/\hat{Z}_j$, ou $x_j = \hat{X}_j/\hat{E}_j$ et $y_j = \hat{Y}_j/\hat{E}_j$ respectivement, les trois signaux $x_j$, $y_j$, $E_j$ étant constitués par les signaux de sortie respectivement du premier diviseur, du deuxième diviseur et d'un circuit de réalignement temporel recevant la sortie du dernier circuit de calcul de désempilement, et en ce que les coefficients de correction sont des coefficients de correction par extrapolation et interpolation, $\alpha$ et $\gamma$ respectivement, destinés aux trois circuits de calcul de désempilement de l'étage de traitement des événements.

10. Caméra à scintillation selon la revendication 9, caractérisée en ce que chacun des trois circuits de calcul de désempilement comprend un soustracteur recevant sur sa première entrée la sortie correspondante de l'étage de sommation numérique, ce soustracteur étant suivi d'une part d'un premier multiplieur et d'un premier registre de stockage et d'autre part, en parallèle sur ce premier multiplieur et ce premier registre, d'un deuxième multiplieur et d'un deuxième registre de stockage, la sortie de ce deuxième registre étant reliée à la deuxième entrée du soustracteur et les deuxièmes entrées des premier et deuxième multiplieurs étant reliées la première à la sortie de la mémoire de stockage du coefficient $\alpha$ et la seconde à la sortie de la mémoire de stockage du coefficient $\gamma$.

11. Caméra à scintillation selon la revendication 10, caractérisée en ce que les multiplieurs sont remplacés par un seul circuit de multiplication associé à un multiplexeur-démultiplexeur temporel.

12. Caméra à scintillation selon la revendication 9, caractérisée en ce que chacun des trois circuits de calcul de désempilement comprend un soustracteur recevant sur sa première entrée la sortie correspondante de l'étage de sommation numérique, ce soustracteur étant suivi d'une part d'un troisième registre de stockage dont la sortie est celle du circuit de calcul de désempilement et d'autre part, en parallèle, d'un troisième multiplieur puis d'un quatrième registre de stockage, la sortie de ce quatrième registre étant reliée à la deuxième entrée du soustracteur et l'autre entrée du troisième multiplieur étant reliée à la sortie de la mémoire de stockage du coefficient $\gamma$.

13. Caméra à scintillation selon l'une des revendications 7 et 8, caractérisée en ce que l'étage de traitement des événements comprend trois circuits de calcul de désempilement, deux diviseurs, un circuit de réalignement temporel, et un circuit de calcul additionnel, les deux diviseurs recevant les signaux $X_{mj}$, $Y_{mj}$, $Z_{mj}$ pour délivrer deux signaux $x_{mj} = X_{mj}/Z_{mj}$ et $y_{mj} = Y_{mj}/Z_{mj}$, ou respectivement les signaux $X_{mj}$, $Y_{mj}$, $E_{mj}$ pour délivrer deux signaux $x_{mj} = X_{mj}/E_{mj}$ et $y_{mj} = Y_{mj}/E_{mj}$, les deux premiers circuits de calcul de désempilement recevant lesdits signaux $x_{mj}$, $y_{mj}$ et délivrant les signaux x, y et le troisième recevant le signal $Z_m$ ou $E_m$ et délivrant le signal $\hat{E}$, et le circuit de calcul additionnel recevant d'une part ledit signal $\hat{E}$ et

d'autre part lesdits coefficients de correction pour fournir aux premier et deuxième circuits de calcul de désempilement un coefficient de correction additionnel $\Gamma$.

14. Caméra à scintillation selon l'une des revendications 1 à 13, caractérisée en ce que les diviseurs sont remplacés par un seul circuit de division associé à un multiplexeur-démultiplexeur temporel.

15. Caméra à scintillation selon l'une des revendications 1 à 14, caractérisée en ce que les circuits de calcul de désempilement sont remplacés par un seul de ces circuits auquel est associé un multiplexeur-démultiplexeur temporel.

16. Caméra à scintillation selon l'une des revendications 1 à 15, caractérisée en ce qu'est prévu un circuit de réjection en amplitude pour la réduction du nombre d'événements à traiter.

17. Caméra à scintillation selon l'une des revendications 1 à 16, caractérisée en ce que des mémoires dites FIFO sont prévues en sortie de chacune des p voies d'acquisition ou en amont de chacun des dispositifs de sommation pondérée numérique.

18. Caméra à scintillation selon l'une des revendications 1 à 17, caractérisé en ce que le bus est associé au calculateur sans lui être inclus.

## Patentansprüche

1. Szintillationskamera mit einem Szintillationskristall, möglicherweise ausgerüstet mit einem Kollimator und zum Umsetzen jedes empfangenen Photons in einer Szintillation, mit einem Lichtleiter zum Koppeln des Kristalls mit dem Eintrittsfenster einer Gruppe von p Photodetektoren zum Umsetzen jeder Szintillation in Strom, mit p Erfassungswegen zum Empfangen der Ausgangssignale der Photodetektoren und zum Ausgeben von p elektrischen Signalen, deren Kennwerte insbesondere mit der Szintillationsintensität und mit dem Abstand dieser Szintillation zu jedem der Photodetektoren zusammenhängen, und mit einem Rechner zum Ausgeben der Koordinaten $x_j$ und $y_j$ einer Szintillation j und der Energie $E_j$, die diesem Ereignis j zugeordnet ist, wobei:

(A) die p Erfassungswege die Verstärkung, die Filterung und die Abtastung der Ausgangssignale der Photodetektoren verwirklichen, und anschließend die Analog/Digitalwandlung der erhaltenen Abtastungen und ihre Summierung bewirken, und dem Rechnereingang p Digitalsignale zuführen;

(B) der Rechner selbst folgende Elemente enthält:

(a) einen Bus zum Transportieren der p Digitalsignale;

(b) eine digitale Summierstufe mit folgenden Elementen:

— einem Pufferspeicher, der die p Ausgangsignale $M_{ij}$ des Transportbusses empfängt:

— einer Schwellen-Subtraktionsschaltung, die an einem Ersten Eingang die vom Pufferspeicher vorzögerten p Signale und an einem zweiten Eingang einen als abhängig bezeichneten Schwellenwert $m_{oj}$ empfängt und p Signale $M_{ij}-m_{oj}$ ausgibt, wobei diese Signale herkömmlicherweise den Wert Null annehmen, wenn $M_{ij}$ kleiner als $m_{oj}$ ist;

— vier digital gewogenen Summierungseinrichtungen, von denen die zwei ersten die p Signale $M_{ij}-m_{oj}$ zur Schwellen-Subtraktionsschaltung und die beiden anderen die p Ausgangssignale $M_{ij}$ des Transportbusses direkt empfangen;

— einem Schwellenrechner, der das Ausgangssignal der vierten digital gewogenen Summierungseinrichtung zum Auswerten der abhängigen Schwelle $m_{oj}$ nach einem Proportionalitätsverhältnis des Wertes $E_{mj}$ empfängt, der jedem Ereignis j zugeordnet ist, wobei diese digitale Summierstufe die Signale $X_{m,j}$, $Y_{m,j}$, $Z_{m,j}$, $E_{m,j}$ wie folgt ausgibt ($K_i$, $H_i$, $J_i$, $G_i$ sind dabei die Gewichtungskoeffizienten):

$$X_{m,j} = \sum_{i=1}^{i=p} K_i (M_{ij}-m_{oj})$$

$$Y_{m,j} = \sum_{i=1}^{i=p} H_i (M_{ij}-m_{oj})$$

$$Z_{m,j} = \sum_{i=1}^{i=p} J_i M_{ij}$$

$$E_{m,j} = \sum_{i=1}^{i=p} G_i M_{ij}$$

entweder direkt am Ausgang der zwei ersten digital gewogenen Summierungseinrichtungen für die zwei ersten dieser Signale oder über zwei Schaltungen zum zeitgebundenen Angleichen jeweils am Ausgang der beiden anderen Einrichtungen für die zwei letzten dieser Signale;

(c) einer Ereignisbearbeitungsstufe mit Vereinzelungsbereichnungsschaltungen und zwei Teilern, welche Stufe ausgehend von den Signalen $X_{mj}$, $Y_{mj}$, $Z_{mj}$, $E_{mj}$ die drei Koordinaten- und Energiesignale $x_j$, $y_j$, $E_j$ bezüglich des Ereignisses j liefert;

(C) eine Detektor-, Sequenzierungs- und Speicherstufe zum Empfangen eines Signals, das der Summe der p Ausgangssignale der Photodetektoren entspricht, welche Stufe einerseits zum Ausgeben der verschiedenen Taktsignale zum Synchronisieren der Elemente der p Erfassungswege und der Rechnerelemente und andererseits der Korrekturkoeffizienten für die Ereignisbearbeitungsstufe vorgesehen ist.

2. Szintillationskamera nach Anspruch 1, dadurch gekennzeichnet, daß die Ereignisbearbeitungsstufe vier Vereinzelungsberechnungsschaltungen, die für jedes Ereignis j die Digitalsignale $X_{mj}$, $Y_{mj}$, $Z_{mj}$ bzw. $E_{mj}$ empfangen und vier Signale $\hat{X}_j$, $\hat{Y}_j$, $\hat{Z}_j$, $\hat{E}_j$ ausgeben und zwei Teiler enthält, die zwei Signale $x_j = \hat{X}_j/\hat{Z}_j$ bzw. $y_j = \hat{Y}_j/\hat{Z}_j$ ausgeben, wobei die drei Signale $x_j$, $y_j$, $E_j$ durch die Ausgangssignale des ersten Teilers, des zweiten Teilers bzw. einer Schaltung zum zeitgebundenen Angleichen gebildet werden, und diese Schaltung das Ausgangssignal der vierten Vereinzelungsberechnungsschaltung empfängt, und daß die Korrekturkoeffizienten durch Extrapolation und Interpolation, α bzw. γ, erhaltene Korrekturkoeffizienten für die erwähnten vier Vereinzelungsberechnungsschaltungen sind.

3. Szintillationskamera nach Anspruch 2, dadurch gekennzeichnet, daß jede der vier Vereinzelungsberechnungsschaltungen eine Subtraktionseinheit enthält, die an ihrem ersten Eingang das der digitalen Summierstufe entsprechende Ausgangssignal empfängt, wobei dieser Subtraktionseinheit einerseits ein erster Multiplizierer und ein erstes Speicherregister folgen, und andererseits parallel zu diesem ersten Multiplizierer und diesem ersten Register ein zweiter Multiplizierer und ein zweites Speicherregister nachgeschaltet sind, wobei der Ausgang dieses zweiten Registers mit dem zweiten Eingang der Subtraktionseinheit und die zweiten Eingänge des ersten und des zweiten Multiplizierers mit dem Ausgang des Speichers zum Einschreiben des Koeffizienten α bzw. mit dem Ausgang des Speichers zum Speichern des Koeffizienten γ verbunden sind.

4. Szintillationskamera nach Anspruch 3, dadurch gekennzeichnet, daß die Multiplizierer durch eine einzige Multiplizierschaltung ersetzt sind, die einem Zeitmultiplexer/Demultiplexer zugeordnet ist.

5. Szintillationskamera nach Anspruch 2, dadurch gekennzeichnet, daß jede der drei ersten Vereinzelungsberechnungsschaltungen eine Subtraktionseinheit enthält, die an ihrem ersten Eingang das entsprechende Ausgangssignal der Summierstufe empfängt, einerseits gefolgt von einem dritten Speicherregister, dessen Ausgang der der Vereinzelungsberechnungsschaltung ist, und andererseits von einem parallelgeschalteten dritten Multiplizierer, und einem vierten Speicherregister, dessen Ausgang mit dem zweiten Eingang der Subtraktionseinheit verbunden ist, wobei der andere Eingang des dritten Multiplizierers mit dem Ausgang des Speicherregisters des Koeffizienten γ verbunden ist.

6. Szintillationskamera nach Anspruch 1, dadurch gekennzeichnet, daß die Ereignisbearbeitungsstufe drei Vereinzelungsberechnungsschaltungen, zwei Teiler, eine Schaltung zum zeitgebundenen Angleichen und eine zusätzliche Berechnungsschaltung enthält, wobei die zwei Teiler die Signale $X_{mj}$, $Y_{mj}$, $Z_{mj}$ zum Ausgeben von zwei Signalen $x_{mj} = X_{mj}/Z_{mj}$ und $y_{mj} = Y_{mj}/Z_{mj}$ empfangen, die ersten und zweiten Vereinzelungsberechnungsschaltungen die Signale $x_{mj}$, $y_{mj}$ empfangen und die Signale $x_j$, $y_j$ ausgeben und die dritte das Signal $E_{mj}$ empfängt und das Signal $\hat{E}$ ausgibt, und die zusätzliche Berechnungsschaltung einerseits das Signal $\hat{E}$ und andererseits die Korrekturkoeffizienten zum Ausgeben eines zusätzlichen Korrekturkoeffizienten $\Gamma$ zu den ersten und zweiten Vereinzelungsberechnungsschaltungen empfängt.

7. Szintillationskamera mit einem Szintillationskristall, möglicherweise mit einem Kollimator und zum Umsetzen jedes empfangenen Photons in eine Szintillation, mit einem Lichtleiter zum Koppeln des Kristalls mit dem Eintrittsfenster einer Gruppe von p Photodetektoren zum Umsetzen jeder Szintillation in Strom, wobei p Erfassungswege die Ausgangssignale der Photodetektoren empfangen und p elektrische Signale ausgeben, deren Kennwerte insbesondere mit der Szintillationsintensität und mit dem Abstand dieser Szintillation zu jedem der Photodetektoren verknüpft sind, und mit einem Rechner zum Ausgeben der Koordinaten $x_j$ und $y_j$ einer Szintillation j und der Energie $E_j$, die mit diesem Ereignis j verknüpft ist, wobei:

(A) die p Erfassungswege die Verstärkung, die Filterung und die Abtastung der Ausgangssignale der Photodetektoren verwirklichen, anschließend die Analog/Digitalwandlung der erhaltenen Abtastungen und ihre Summierung bewirken und dem Rechnereingang p Digitalsignale zuführen;

(B) der Rechner selbst folgende Elemente enthält:

(a) einen Bus zum Transportieren der p Digitalsignale;

(b) eine digitale Summierstufe mit folgenden Elementen:

— einem Pufferspeicher, der die p Ausgangssignale $M_{ij}$ des Transportbusses empfängt;

— einer Schwellen-Subtraktionsschaltung, die an einem ersten Eingang die vom Pufferspeicher verzögerten p Signale und an einem zweiten Eingang einen als abhängig bezeichneten Schwellenwert $m_{oj}$ empfängt und p Signale $M_{ij}-m_{oj}$ ausgibt, wobei diese Signale herkömmlicherweise den Wert Null annehmen, wenn $M_{ij}$ kleiner als $m_{oj}$ ist;

— drei digital gewogenen Summierungseinrichtungen, von denen die zwei ersten die p Signale $M_{ij}-m_{oj}$ Schwellen-Subtraktionsschaltung empfangen und die letzte die p Ausgangssignale $M_{ij}$ des Transportbusses direkt empfängt;

— einem Schwellenrechner, der das Ausgangssignal der letzten digital gewogenen Summierungseinrichtung zum Auswerten der abhängigen Schwelle $m_{oj}$ nach einem Proportionalitätsverhältnis des Wertes $E_{mj}$ empfängt, der jedem Ereignis j zugeordnet ist, wobei diese digitale Summierstufe die Signale $X_{m,j}$, $Y_{m,j}$, $Z_{m,j}$ wie folgt ausgibt ($K_i$, $H_i$, $J_i$ sind dabei die Gewichtungskoeffizienten):

$$X_{m,j} = \sum_{i=1}^{i=p} K_i (M_{ij} - m_{oj})$$

$$Y_{m,j} = \sum_{i=1}^{i=p} H_i (M_{ij} - m_{oj})$$

$$Z_{m,j} = \sum_{i=1}^{i=p} J_i \, M_{ij}$$

entweder direkt am Ausgang der ersten und zweiten digital gewogenen Summierungseinrichtungen für die zwei ersten dieser Signale oder über eine Schaltung zum zeitgebundenen Angleichen am Ausgang der letzten Einrichtung für das letzte dieser Signale;

(c) einer Ereignisbearbeitungsstufe mit Vereinzelungsberechnungsschaltungen und zwei Teilern, welche Stufe ausgehend von den Signalen $X_{mj}$, $Y_{mj}$, $Z_{mj}$ die drei Koordinaten- und Energiesignale $x_j$, $y_j$, $E_j$ bezüglich des Ereignisses j liefert;

(C) eine Detektor-, Sequenzierungs- und Speicherungsstufe zum Empfangen eines Signals, das der Summe der p Ausgangssignale der Photodetektoren entspricht, welche Stufe einerseitz zum Abgeben der verschiedenen Taktsignale zum Synchronisieren der Elemente der p Erfassungswege und der Rechnerelemente und andererseits der Korrekturkoeffizienten für die Ereignisbearbeitungsstufe vorgesehen ist.

8. Szintillationskamera mit einem Szintillationskristall, möglicherweise mit einem Kollimator und zum Umsetzen jedes empfangenen Photons in eine Szintillation, mit einem Lichtleiter zum Koppeln des Kristalls mit dem Eintrittsfenster einer Gruppe von p Photodetektoren zum Umsetzen jeder Szintillation in Strom, wobei p Erfassungswege die Ausgangssignale der Photodetektoren empfangen und p elektrische Signale ausgeben, deren Kennlinien insbesondere mit der Szintillationsintensität und mit dem Abstand dieser Szintillation zu jedem der Photodetektoren verknüpft sind, und mit einem Rechner zum Ausgeben der Koordinaten $x_j$ und $y_j$ einer Szintillation j und der Energie $E_j$, die mit diesem Ereignis j verknüpft ist, wobei:

(A) die p Erfassungswege die Verstärkung, die Filterung und die Abtastung der Ausgangssignale der Photodetektoren verwirklichen, und anschließend die Analog/Digitalwandlung der erhaltenen Abtastungen und ihre Summierung bewirken, und dem Rechnereingang p Digitalsignale zuführen;

(B) der Rechner selbst folgende Elemente enthält:

(a) einen Bus zum Transportieren der p Digitalsignale;

(b) eine digitale Summierstufe mit folgenden Elementen:

— einem Pufferspeicher, der die p Ausgangsignale $M_{ij}$ des Transportbusses empfängt;

— einer Schwellen-Subtraktionsschaltung, die an einem ersten Eingang die vom Pufferspeicher verzögerten p Signale und an einem zweiten Eingang einen als abhängig bezeichneten Schwellenwert $m_{oj}$ empfängt, und p Signale $M_{ij} - m_{oj}$ ausgibt, wobei diese Signale herkömmlicherweise den Wert Null annehmen, wenn $M_{ij}$ kleiner als $m_{oj}$ ist;

— drei digital gewogenen Summierungseinrichtungen, von denen die zwei ersten die p Signale $M_{ij} - m_{oj}$ zur Schwellen-Subtraktionsschaltung empfangen und die letzte die p Ausgangssignale $M_{ij}$ des Transportbusses direkt empfängt;

— einem Schwellenrechner, der das Ausgangssignal der letzten digital gewogenen Summierungseinrichtung zum Auswerten der abhängigen Schwelle $m_{oj}$ nach einem Proportionalitätsverhältnis des Wertes $E_{mj}$ empfängt, der jedem Ereignis j zugeordnet ist, wobei diese digitale Summierstufe die Signale $X_{m,j}$, $Y_{m,j}$, $E_{m,j}$ wie folgt ausgibt ($K_i$, $H_i$, $G_i$ sind dabei die Gewichtungskoeffizienten):

$$X_{m,j} = \sum_{i=1}^{i=p} K_i (M_{ij} - m_{oj})$$

$$Y_{m,j} = \sum_{i=1}^{i=p} H_i (M_{ij} - m_{oj})$$

$$E_{m,j} = \sum_{i=1}^{i=p} G_i \, M_{ij}$$

entweder direkt am Ausgang der ersten und zweiten digital gewogenen Summierungseinrichtungen für die zwei ersten dieser Signale oder über eine Schaltung zum zeitgebundenen Angleichen am Ausgang der letzten Einrichtung für das letzte dieser Signale;

(c) einer Ereignisbearbeitungsstufe mit Vereinzelungsberechnungsschaltungen und zwei Teilern, welche Stufe ausgehend von den Signalen $X_{mj}$, $Y_{mj}$, $E_{mj}$ die drei Koordinaten und Energie Signale $x_j$, $y_j$, $E_j$ bezüglich des Ereignisses j liefert;

(C) eine Detektor-, Sequenzierungs- und Speicherungsstufe zum Empfangen eines Signals, das der Summe der p Ausgangssignale der Photodetektoren entspricht, welche Stufe einerseits zum Abgeben der verschiedenen Taktsignale zum Synchronisieren der Elemente der p Erfassungswege und der Rechnerelemente und andererseits der Korrekturkoeffizienten für die Ereignisbearbeitungsstufe vorgesehen ist.

9. Szintillationskamera nach einem der Ansprüche 7 und 8, dadurch gekennzeichnet, daß die Ereignisbearbeitungsstufe drei Vereinzelungsberechnungsschaltungen, die die Digitalsignale $X_{mj}$, $Y_{mj}$, bzw. $Z_{mj}$ oder $X_{mj}$, $Y_{mj}$ bzw. $E_{mj}$ empfangen und drei Signale $\hat{X}_j$, $\hat{Y}_j$, $\hat{Z}_j$ bzw. $\hat{X}_j$, $\hat{Y}_j$, $\hat{E}_j$ ausgeben, und zwei Teiler enthält, die zwei signale $x_j = \hat{X}_j/\hat{Z}_j$ bzw. $y_j = \hat{Y}_j/\hat{Z}_j$ oder $x_j = \hat{X}_j/\hat{E}_j$ und $y_j = \hat{Y}_j/\hat{E}_j$ ausgeben, wobei die drei Signale $x_j$, $y_j$, $E_j$ durch die Ausgangssignale des ersten Teilers, des zweiten Teilers bzw. einer Schaltung zum zeitgebundenen Angleichen gebildet werden, die das Ausgangssignal der letzten Vereinzelungsberechnungsschaltung empfängt, und daß die Korrekturkoeffizienten die durch Extrapolation und Interpolation, $\alpha$ bzw. $\gamma$, erhaltenen Korrekturkoeffizienten für die drei Vereinzelungsberechnungsschaltungen der Ereignisbearbeitungsstufe sind.

10. Szintillationskamera nach Anspruch 9, dadurch gekennzeichnet, daß jede der drei Vereinzelungsberechnungsschaltungen eine Subtraktionseinheit enthält, die an ihrem ersten Eingang das entsprechende Ausgangssignal der digitalen Summierstufe empfängt, wobei diese Subtraktionseinheit einerseits von einem ersten Multiplizierer und von einem ersten Speicherregister und andererseits in Parallelschaltung mit diesem ersten Multiplizierer und mit diesem ersten Register von einem zweiten Multiplizierer und einem zweiten Speicherregister gefolgt wird, wobei der Ausgang dieses zweiten Registers mit dem zweiten Eingang der Subtraktionseinheit und die zweiten Eingänge der ersten und zweiten Multiplizierer mit dem Ausgang des Speichers zum Einschreiben des Koeffizienten $\alpha$ bzw. mit dem Ausgang des Speichers zum Einschreiben des Koeffizienten $\gamma$ verbunden sind.

11. Szintillationskamera nach Anspruch 10, dadurch gekennzeichnet, daß die Vervielfacher durch eine einzige Multiplizierschaltung ersetzt werden, die mit einem Zeitmultiplexer/Demultiplexer verbunden ist.

12. Szintillationskamera nach Anspruch 9, dadurch gekennzeichnet, daß jede der drei Vereinzelungsberechnungsschaltungen eine Subtraktionseinheit enthält, die an ihrem ersten Eingang das entsprechende Ausgangssignal der digitalen Summierstufe empfängt, wobei diese Subtraktionseinheit einerseits von einem dritten Speicherregister, dessen Ausgang der der Vereinzelungsberechnungsschaltung ist, und andererseits in Parallelschaltung von einem dritten Multiplizierer und von einem vierten Speicherregister gefolgt wird, wobei der Ausgang dieses vierten Registers mit dem zweiten Eingang der Subtraktionseinheit verbunden ist und der andere Eingang des dritten Multiplizierers mit dem Ausgang des Speichers zum Einschreiben des Koeffizienten $\gamma$ verbunden ist.

13. Szintillationskamera nach einem der Ansprüche 7 und 8, dadurch gekennzeichnet, daß die Ereignisbearbeitungsstufe drei Vereinzelungsberechnungsschaltungen, zwei Teiler, eine Schaltung zum zeitgebundenen Angleichen und eine zusätzliche Berechnungsschaltung enthält, wobei die zwei Teiler die Signale $X_{mj}$, $Y_{mj}$, $Z_{mj}$ zum Ausgeben von zwei Signalen $x_{mj} = X_{mj}/Z_{mj}$ und $y_{mj} = Y_{mj}/Z_{mj}$ oder die Signale $X_{mj}$, $Y_{mj}$, $E_{mj}$ zum Ausgeben von zwei Signale $x_{mj} = X_{mj}/E_{mj}$ bzw. $y_{mj} = Y_{mj}/E_{mj}$ empfangen, und die zwei ersten Vereinzelungsberechnungsschaltungen die Signale $x_{mj}$ und $y_{mj}$ empfangen und die Signale x, y ausgeben, und die dritte das Signal $Z_m$ oder $E_m$ empfängt und das Signal $\hat{E}$ ausgibt, und die zusätzliche Berechnungs-schaltung einerseits das Signal $\hat{E}$ und andererseits die Korrekturkoeffizienten empfängt, um die ersten und zweiten Vereinzelungsberechnungsschaltungen mit einem zusätzlichen Korrekturkoeffizienten $\Gamma$ zu beliefern.

14. Szintillationskamera nach einem der Ansprüche 1 bis 13, dadurch gekennzeichnet, daß die Teiler durch eine einzige Teilerschaltung ersetzt werden, die einem Zeitmultiplexer/Demultiplexer zugeordnet ist.

15. Szintillationskamera nach einem der Ansprüche 1 bis 14, dadurch gekennzeichnet, daß die Vereinzelungsberechnungsschaltungen durch eine einzige dieser Schaltungen ersetzt werden, die einem Zeitmultiplexer/Demultiplexer zugeordnet ist.

16. Szintillationskamera nach einem der Ansprüche 15, dadurch gekennzeichnet, daß eine Amplitudenablehnschaltung zum Reduzieren der Anzahl der zu behandelnden Ereignisse vorgesehen ist.

17. Szintillationskamera nach einem der Ansprüche 1 bis 16, dadurch gekennzeichnet, daß FIFO-Speicher am Ausgang jedes der p Erfassungswege oder stromaufwärts jeder der digital gewogenen Summierungseinrichtungen vorgesehen sind.

18. Szintillationskamera nach einem der Ansprüche 1 bis 17, dadurch gekennzeichnet, daß der Bus einem Rechner zugeordnet ist, ohne darin aufgenommen zu sein.

## Claims

1. A scintillation camera which comprises a scintillation crystal which possibly includes a collimator and which serves to convert each photon received into a scintillation, a light guide for coupling said crystal to the entrance window of an array of $p$ photodetectors which serve to convert each scintillation into a current, $p$ acquisition channels which receive the output signals of said photodetectors and which supply $p$ characteristic electric signals which relate notably to the intensity of the scintillation and to the distance between the respective scintillation and each of the photodetectors, and an arithmetic device which serves to supply the coordinates $x_j$ and $y_j$ of scintillation $j$ and the energy $E_j$ associated with the event $j$, so that

(A) said $p$ acquisition channels realize the amplification, filtering and sampling of said output signals of the photodetectors, followed by the A/D conversion of the samples obtained and their summing, and apply $p$ digital signals to the input of the arithmetic device;

(B) the arithmetic device itself comprises:

(a) bus for transferring said $p$ digital signals;

(b) a digital summing stage which itself comprises:

— a buffer memory which receives the $p$ output signal $M_{ij}$ of the transfer bus;

— a threshold subtraction circuit, first input of which receives said $p$ signals, delayed by the buffer memory, whilst a second input thereof receives a dependent threshold value $m_{oj}$, said subtraction circuit supplying $p$ signals $M_{ij}-m_{oj}$ which conventionally assume the value 0 if $M_{ij}$ is smaller than $m_{oj}$;

— four digital weighted sum forming devices, the first two of which receive the $p$ signals $M_{ij}-m_{oj}$ supplied by the threshold subtraction circuit, whilst the other two receive directly the $p$ output signals $M_{ij}$ of the transfer bus;

— a threshold calculation device which receives the output signal of the fourth digital weighted sum forming device in order to evaluate the dependent threshold $m_{oj}$ according to a proportionality relation with the value $E_{mj}$ associated with each event $i$;

said digital summing stage supplying the following signals $X_{m,j}$, $Y_{m,j}$, $Z_{m,j}$, $E_{m,j}$ ($K_i$, $H_i$, $J_i$, $G_i$ being weighting coefficients):

$$X_{m,j} = \sum_{i=1}^{i=p} K_i(M_{ij}-m_{oj})$$

$$Y_{m,j} = \sum_{i=1}^{i=p} H_i(M_{ij}-m_{oj})$$

$$Z_{m,j} = \sum_{i=1}^{i=p} J_i M_{ij}$$

$$E_{m,j} = \sum_{i=1}^{i=p} G_i M_{ij}$$

either directly on the output of the first two digital weighted sum forming devices for the first two of these signals, or *via* two time realignment circuits, connected to the output of the other two devices, for the last two of these signals;

(c) an event processing stage which includes unpiling calculation circuits and two dividers and which supplies, on the basis of the signals $X_{m,j}$, $Y_{m,j}$, $Z_{m,j}$, $E_{m,j}$, the three coordinate and energy signals $x_j$, $y_j$, $E_j$ relating to the event $j$;

(C) a detection, sequencing and storage stage which receives a signal which corresponds to the sum of the $p$ output signals of the photodetectors is provided in order to supply on the one hand the various clock signals for synchronizing the elements of the $p$ acquisition channels and the elements of the arithmetic device, and on the other hand correction coefficients for the event processing stage.

2. A scintillation camera as claimed in Claim 1, characterized in that the event processing stage comprises four unpiling calculation circuits which receive the digital signals $X_{mj}$, $Y_{mj}$, $Z_{mj}$, $E_{mj}$, respectively, for each event $j$ and which supply four signals $\hat{X}_j$, $\hat{Y}_j$, $\hat{Z}_j$, $\hat{E}_j$, and two dividers which supply two signals $x_j = \hat{X}_j/\hat{Z}_j$ and $y_j = \hat{Y}_j/\hat{Z}_j$, respectively, the three signals $x_j$, $y_j$, $E_j$ being formed by the output signals of the first divider, the second divider and a time realignment circuit, respectively, which receives the output signal of the fourth unpiling calculation circuit, the correction coefficients being coefficients for correction by extrapolation and interpolation, $\alpha$ and $\gamma$, respectively, for the four unpiling calculation circuits.

3. A scintillation camera as claimed in Claim 2, characterized in that each of the four unpiling calculation circuits comprises a subtractor whose first input receives the corresponding output signal of the digital summing stage, which subtractor is followed on the one hand by a first multiplier and a first storage register, and on the other hand by a second multiplier and a second storage register which are connected parallel to the first multiplier and the first storage register, the output of the second register being connected to the second input of the subtractor, the second input of the first multiplier being connected to the output of the memory for storing the coefficient $\alpha$, whilst the second input of the second multiplier is connected to the output of the memory for storing the coefficient $\gamma$.

4. A scintillation camera as claimed in Claim 3, characterized in that the multipliers are replaced by a single multiplier circuit which is associated with a time multiplexer/demultiplexer.

5. A scintillation camera as claimed in Claim 2, characterized in that each of the first three unpiling calculation circuits comprises a subtractor whose first input receives the corresponding output signal of the summing stage, followed on the one hand by a third storage register whose output is that of the unpiling calculation circuit and, on the other hand, in parallel, by a third multiplier, followed by a fourth storage register whose output is connected to the second input of the subtractor, the other input of the third multiplier belong connected to the output of memory for storing the coefficient γ.

6. A scintillation camera as claimed in Claim 1, characterized in that the event processing stage comprises three unpiling calculation circuits, two dividers, a time realignment circuit, and an additional calculation circuit, the two dividers receiving the signals $X_{mj}$, $Y_{mj}$, $Z_{mj}$ in order to supply two signals $x_{mj} = X_{mj}/Z_{mj}$ and $Y_{mj} = Y_{mj}/Z_{mj}$, the first and the second unpiling calculation circuits receiving said signals $x_{mj}$, $y_{mj}$ and supplying the signals $x_j$, $y_j$, the third unpiling calculation circuit receiving the signal $E_{mj}$ and supplying the signal $\hat{E}$, the additional calculation circuit receiving on the one hand said signal $\hat{E}$ and on the other hand said correction coefficients in order to supply the first and the second unpiling calculation circuit with an additional correction coefficient $\Gamma$.

7. A scintillation camera which comprises a scintillation crystal which possibly includes a collimator and serves to convert each photon received into a scintillation, a light guide for coupling said crystal to the entrance window of an array of $p$ photodetectors which serve to convert each scintillation into current, $p$ acquisition channels which receive the output signal of said photodetectors and which supply $p$ characteristic electric signals which relate notably to the intensity of the scintillation and to the distance between the respective scintillation and each of the photodetectors, and an arithmetic device which serves to supply the coordinates $x_j$ and $y_j$ of a scintillation $j$ and the energy $E_j$ associated with the event $j$, so that:

(A) said $p$ acquisition channels realize the amplification, filtering and sampling of said output signals of the photodetectors, followed by the A/D conversion of the samples obtained and their summing, and apply $p$ digital signals to the input of the arithmetic device;

(B) the arithmetic device itself comprises:

(a) a bus for transferring said $p$ digital signals;

(b) a digital summing stage which itself comprises:

— a buffer memory which receives the $p$ output signals $M_{ij}$ of the transfer bus;

— a threshold subtraction circuit, a first input of which receives said $p$ signals, delayed by the buffer memory, whilst a second input thereof receives a dependent threshold value $m_{oj}$, said subtraction circuit supplying $p$ signals $M_{ij}-m_{oj}$ which conventionally assume the value 0 if $M_{ij}$ is smaller than $m_{oj}$;

— three digital weighted sum forming devices, the first two of which receive the $p$ signals $M_{ij}-m_{oj}$ supplied by the threshold subtraction circuit, whilst the last device receives directly the $p$ output signals $M_{ij}$ of the transfer bus;

— a threshold calculation device which receives the output signal of said last digital weighted sum forming device in order to evaluate the dependent threshold $m_{oj}$ according to a proportionality relation with the value $E_{mj}$ associated with each event $j$; said digital summing stage supplying the following signals $X_{m,j}$, $Y_{m,j}$, $Z_{m,j}$ ($K_i$, $H_i$, $J_i$ being the weighting coefficients):

$$X_{m,j} = \sum_{i=1}^{i=p} K_i (M_{ij}-m_{oj})$$

$$Y_{m,j} = \sum_{i=1}^{i=p} H_i (M_{ij}-m_{oj})$$

$$Z_{m,j} = \sum_{i=1}^{i=p} J_i M_{ij}$$

either directly on the output of the first and the second digital weighted sum forming device for the first two of these signals or *via* a time realignment circuit connected to the output of the last device, for the last one of these signals;

(c) an event proocessing stage which includes unpiling calculation circuits and two dividers and which supplies, on the basis of the signals $X_{mj}$, $Y_{mj}$, $Z_{mj}$, the three coordinate and energy signals $x_j$, $y_j$, $E_j$ relating to the event $j$;

(C) a detection, sequencing and storage stage which receives a signal which corresponds to the sum of the $p$ output signals of the photodetectors is provided in order to supply on the one hand the various clock signals for synchronizing the elements of the $p$ acquisition channels and the elements of the arithmetic device, and on the other hand the correction coefficients for the event processing stage.

8. A scintillation camera which comprises a scintillation crystal which possibly includes a collimator and serves to convert each photon received into a scintillation, a light guide for coupling said crystal to the entrance window of an array of $p$ photodetectors which serve to convert each scintillation into a current, $p$ acquisition channels which receive the output signals of said photodetectors and which supply $p$ characteristic electric signals which relate notably to the intensity of the scintillation and to the distance between the respective scintillation and each of the photodetectors, and an arithmetic device which serves to supply the coordinates $x_j$ and $y_j$ of a scintillation $j$ and the energy $E_j$ associated with the event $j$, so that:

(A) said $p$ acquisition channels realize the amplification, filtering and sampling of said output signals of the photodetectors, followed by the A/D conversion of the samples obtained and their summing, and apply $p$ digital signals to the input of the arithmetic device;

    (B) the arithmetic device itself comprises:

    (a) a bus for transferring said $p$ digital signals;

    (b) a digital summing stage which itself comprises:

    — a buffer memory which receives the $p$ output signals $M_{ij}$ of the transfer bus;

    — a threshold subtraction circuit, a first input of which receives said $p$ signals, delayed by the buffer memory, whilst a second input thereof receives a dependent threshold value $m_{oj}$, said subtraction circuit supplying $p$ signals $M_{ij}-m_{oj}$ which conventionally assume the value 0 if $M_{ij}$ is smaller than $m_{oj}$;

    — three digital weighted sum forming devices, the first two of which receive the $p$ signals $M_{ij}-m_{oj}$ supplied by the threshold subtraction circuit, whilst the last one receives directly the $p$ output signals $M_{ij}$ of the transfer bus;

    — a threshold calculation device which receives the output signal of said last digital weighted sum forming device in order to evaluate the dependent threshold $m_{oj}$ according to a proportionality relation with the value $E_{mj}$ associated with each event $j$; said digital summing stage supplying the following signals $X_{m,j}$, $Y_{m,j}$, $E_{m,j}$ ($K_i$, $H_i$, $G_i$ being the weighting coefficients):

$$X_{m,j} = \sum_{i=1}^{i=p} K_i(M_{ij}-m_{oj})$$

$$Y_{m,j} = \sum_{i=1}^{i=p} H_i(M_{ij}-m_{oj})$$

$$E_{m,j} = \sum_{i=1}^{i=p} G_i\, M_{ij}$$

either directly on the output of the first and the second digital weighted sum forming device for the first two of these signals or *via* a time realignment circuit, connected to the output of the last device, for the last one of these signals;

    (c) an event processing stage which includes unpiling calculation circuits and two dividers and which supplies, on the basis of the signals $X_{mj}$, $Y_{mj}$, $E_{mj}$, the three coordinate and energy signals $x_j$, $y_j$, $E_j$ relating to the event $j$;

    (C) a detection, sequencing and storage stage which receives a signal which corresponds to the sum of the $p$ output signals of the photodetectors is provided in order to supply on the one hand the various clock signals for synchronizing the elements of the $p$ acquisition channels and the elements of the arithmetic device, and on the other hand correction coefficients for the event processing stage.

    9. A scintillation camera as claimed in any one of the Claims 7 and 8, characterized in that the event processing stage comprises three unpiling calculation circuits which receive said digital signals $X_{mj}$, $Y_{mj}$, $Z_{mj}$ or $X_{mj}$, $Y_{mj}$, $E_{mj}$, respectively, and which supply three signals $\hat{X}_j$, $\hat{Y}_j$, $\hat{Z}_j$, or $\hat{X}_j$, $\hat{Y}_j$, $\hat{E}_j$, respectively, and two dividers which supply two signals $x_j = \hat{X}_j/\hat{Z}_j$ and $y_j = \hat{Y}_j/\hat{Z}_j$ or $x_j = \hat{X}_j/\hat{E}_j$ and $y_j = \hat{Y}_j/\hat{E}_j$, respectively, the three signals $x_j$, $y_j$, $E_j$ being formed by the output signals of the first divider, the second divider and a time realignment circuit, respectively, which receives the output signal of the last unpiling calculation circuit, the correction coefficients being coefficients for correction by extrapolation and interpolation, $\alpha$ and $\gamma$, respectively, for the three unpiling calculation circuits of the event processing stage.

    10. A scintillation camera as claimed in Claim 9, characterized in that each of the three unpiling calculation circuits comprises a subtractor whose first input receives the corresponding output signal of the digital summing stage, which subtractor is followed on the one hand by a first multiplier and a first storage register and on the other hand by a second multiplier and a second storage register which are connected parallel to the first multiplier and the first storage register, the output of the second register being connected to the second input of the subtractor, the second input of the first multiplier being connected to the output of the memory for storing the coefficient $\alpha$ whilst the second input of the second multiplier is connected to the output of the memory for storing the coefficient $\gamma$.

    11. A scintillation camera as claimed in Claim 10, characterized in that the multipliers are replaced by a single multiplier circuit which is associated with a time multiplexer/demultiplexer.

    12. A scintillation camera as claimed in Claim 9, characterized in that each of the three unpiling calculation circuits comprises a subtractor whose first input receives the corresponding output signal of the digital summing device, which subtractor is followed on the one hand by a third storage register whose output is that of the unpiling calculation circuit and on the other hand, in parallel, by a third multiplier and a fourth storage register, the output of the fourth storage register being connected to the second input of the subtractor, the other input of the third multiplier being connected to the output of the memory for storing the coefficient $\gamma$.

    13. A scintillation camera as claimed in any one of the Claims 7 and 8, characterized in that the event processing stage comprises three unpiling calculation circuits, two dividers, a time realignment circuit, and an additional calculation circuit, the two dividers receiving the signals $X_{mj}$, $Y_{mj}$, $Z_{mj}$ in order to supply two signals $x_{mj} = X_{mj}/Z_{mj}$ and $y_{mj} = Y_{mj}/Z_{mj}$, or the signals $X_{mj}$, $Y_{mj}$, $E_{mj}$, respectively, in order to supply two signals $x_{mj} = X_{mj}/E_{mj}$ and $y_{mj} = Y_{mj}/E_{mj}$, respectively, the two unpiling calculation circuits receiving said signals $x_{mj}$, $y_{mj}$ and supplying the signals x, y whilst the third unpiling calculation circuit receives the signal $Z_m$ or $E_m$ and supplies the signal $\hat{E}$, the additional calculation circuit receiving on the one hand said signal $\hat{E}$ and on the other hand said correction coefficients in order to supply the first and the second unpiling calculation circuit with an additional correction coefficient $\Gamma$.

14. A scintillation camera as claimed in any one of the Claims 1 to 13, characterized in that the dividers are replaced by a single divider circuit associated with a time multiplexer/demultiplexer.

15. A scintillation camera as claimed in any one of the Claims 1 to 14, characterized in that the unpiling calculation circuits are replaced by a single circuit of this kind in association with a time multiplexer/demultiplexer.

16. A scintillation camera as claimed in any one of the Claims 1 to 15, characterized in that there is provided an amplitude rejection circuit for reducing the number of events to be processed.

17. A scintillation camera as claimed in any one of the Claims 1 to 16, characterized in that FIFO memories are connected to the output of each of the $p$ acquisition channels or upstream from each of the digital weighted sum forming devices.

18. A scintillation camera as claimed in any one of the Claims 1 to 17, characterized in that the bus is connected to the arithmetic device without being included therein.

FIG.1

1

**FIG.2**

**FIG.6**

FIG.3

FIG. 4

FIG.5

FIG.7

FIG.8

FIG.9

FIG.10

FIG.11

FIG.12

FIG.13

FIG.14

FIG.15